# EUROPEAN PATENT APPLICATION

(11) **EP 4 679 726 A2**
(43) Date of publication of application: **14.01.2026**
(21) Application number: 25189040.6
(22) Date of filing: 11.07.2025
(51) Int. Cl.: H04B 7/0456

(54) **USER EQUIPMENT WITH CALIBRATION**

(30) Priority: 12.07.2024 GB 202410179
(71) Applicant: Nokia Technologies Oy, 02610 Espoo (FI)
(72) Inventor: KARJALAINEN, Juha Pekka, 88600 Sotkamo (FI); KOSKELA, Timo, 90670 Oulu (FI); HAKOLA, Sami-Jukka, 90540 Oulu (FI); SVENDSEN, Simon, 9220 Aalborg (DK); CAPORAL DEL BARRIO, Samantha, 9000 Aalborg (DK)
(74) Representative: Richardt Patentanwälte PartG mbB

(57) **Abstract**

A user equipment, UE, comprising means for determining a multi-antenna port calibration capability of the UE, wherein the multi-antenna port calibration capability depends on a capability of the UE to perform relative phase and/or amplitude calibration between multiple antenna ports of the UE.

## Description

### TECHNOLOGICAL FIELD

Examples of the disclosure relate to a user equipment and network node. Some relate to a user equipment and network node for non-codebook based uplink transmission.

### BACKGROUND

In uplink transmission, precoding is applied to signals to compensate for the response (time domain) or transfer function (frequency domain) of the uplink channel and of the transmission circuitry.

Two transmission schemes are provided for uplink transmission: codebook-based transmission and non-codebook-based transmission.

### BRIEF SUMMARY

According to various, but not necessarily all, examples there is provided a user equipment, UE, comprising means for determining a multi-antenna port calibration capability of the UE, wherein the multi-antenna port calibration capability depends on a capability of the UE to perform relative phase and/or amplitude calibration between multiple antenna ports of the UE.

In some but not necessarily all examples, determining the multi-antenna port calibration capability comprises generating a multi-antenna port calibration capability indicator for facilitating non-codebook-based precoding for uplink communications between the UE and a network, wherein the multi-antenna port calibration capability indicator indicates a capability of the UE to perform relative phase and/or amplitude calibration between multiple antenna ports of the UE.

In some but not necessarily all examples, determining the multi-antenna port calibration capability comprises measuring one or more reference signals using one or more antenna ports.

In some but not necessarily all examples, determining the multi-antenna port calibration capability comprises measuring symbols of the one or more reference signals.

In some but not necessarily all examples, determining the multi-antenna port pre-coding values comprises determining a difference between one or more dynamic characteristics of two or more antenna ports based, at least in part, on a comparison of a measurement of one or more downlink reference signals measured at the first antenna port and the second antenna port.

In some but not necessarily all examples, determining the multi-antenna port calibration capability comprises comparing a measurement of a first measured reference signal against a measurement of a second reference signal, wherein the first reference signal is a downlink reference signal and the second reference signal is at least one of: a measurement of a different measured reference signal; a measurement of a reference signal measured at a different antenna port to the first measured reference signal; an uplink reference signal; or an expected measurement of a reference signal.

In some but not necessarily all examples, determining the multi-antenna port calibration capability comprises determining a difference between one or more dynamic characteristics of a first antenna port of the two or more antenna ports and one or more dynamic characteristics of a second antenna port of the two or more antenna ports based, at least in part, on a comparison of a measurement of a downlink reference signal measured at the first antenna port and a measurement of a downlink reference signal measured at the second antenna port.

In some but not necessarily all examples, the one or more dynamic characteristics comprise at least one of: directivity; complex impedance; angular direction of maximum gain; phase; amplitude.

In some but not necessarily all examples, the user equipment comprises means for identifying, based on the comparison of the measurement of the first measured reference signal and the measurement of the second measured reference signal, one or more valid RF-branches covering a first frequency band, wherein an RF-branch is connected to one out of one or more selectable antenna ports.

In some but not necessarily all examples, the identification of the one or more valid RF branches covering a first frequency band is based, at least in part, on the comparison of the measurement of the first measured reference signal and the measurement of the second measured reference signal.

In some but not necessarily all examples, the identification of the one or more valid RF branches covering a first frequency band is based, at least in part on a measured downlink reference signal at the antenna port connected to the RF branch and a measured uplink reference signal at the antenna port connected to the RF branch.

In some but not necessarily all examples, a UE is fully-calibrated if the UE is capable of performing relative phase and/or amplitude calibration between the antenna ports connected to all of the RF branches and all of the RF branches are valid.

In some but not necessarily all examples, a UE is partially-calibrated if the UE is capable of performing relative phase and/or amplitude calibration between a subset of the antenna ports connected to a subset of the RF branches and/or a subset of the RF branches are valid.

In some but not necessarily all examples, a UE is non-calibrated if the UE is not capable of performing relative phase and/or amplitude calibration between the antenna ports connected to the RF branches or all of the RF branches are invalid.

In some but not necessarily all examples, the user equipment comprises means for determining, based on the identification of one or more valid RF-branches covering a first frequency band, a number of valid RF-branches covering the first frequency band.

In some but not necessarily all examples, the user equipment comprises means for determining a number of available antenna ports covering the first frequency band.

In some but not necessarily all examples, determining a number of available antenna ports covering the first frequency band comprises: determining a number of antenna ports of the UE which cover the first frequency band; and determining how many of the antenna ports covering the first frequency band are in use, and determining the number of available antenna ports covering the first frequency band by subtracting the number of antenna ports in use from the number of antenna ports which cover the first frequency band.

In some but not necessarily all examples, the user equipment comprises means for determining a maximum number of available antenna ports for transmission within the first frequency band based at least in part on the determined number of valid RF branches covering the first frequency band and the determined number of antenna ports covering the first frequency band.

In some but not necessarily all examples, the maximum number of available antenna ports for transmission within the first frequency band is equal to the determined number of valid RF branches covering the first frequency band if: the determined number of available antenna ports covering the first frequency band is equal to, or greater than, the determined number of valid RF branches covering the first frequency band; and all of the available antenna ports covering the first frequency band can be connected to all of the valid RF branches.

In some but not necessarily all examples, wherein the maximum number of available antenna ports for transmission within the first frequency band is equal to the lower of the determined number of valid RF branches covering the first frequency band and the determined number of available antenna ports covering the first frequency band.

In some but not necessarily all examples, the user equipment comprises means for determining at least one of a maximum number of fully-calibrated antenna ports available for transmission within the first frequency band and a maximum number of partially-calibrated antenna ports available for transmission within the first frequency band based on the calibration capabilities of the determined valid RF branches covering the first frequency band.

In some but not necessarily all examples, the user equipment comprises means for identifying an available antenna port as having a calibration capability of fully-calibrated or partially-calibrated in dependence upon a calibration capability of an RF branch to which the antenna port is connected.

In some but not necessarily all examples, the user equipment comprises means for generating the multi-antenna port calibration capability indicator comprises generating an indication of the number of available antenna ports for transmission within the first frequency band.

In some but not necessarily all examples, the user equipment comprises means for: obtaining an indication to initiate determination of the multi-antenna port calibration capability; and initiating determination of the multi-antenna port calibration capability based on the indication.

In some but not necessarily all examples, the user equipment comprises means for receiving the indication from a network node.

In some but not necessarily all examples, the user equipment means for generating the indication based on a trigger condition being met.

According to various, but not necessarily all, embodiments there is provided an apparatus comprising means for performing at least part of one or more methods described herein. The description of a function and/or action should additionally be considered to also disclose any means suitable for performing that function and/or action. Functions and/or actions described herein can be performed in any suitable way using any suitable method.

According to various, but not necessarily all, embodiments there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or computer program instructions as desired, and as appropriate. The description of a function should additionally be considered to also disclose any means suitable for performing that function.

### BRIEF DESCRIPTION

Some examples will now be described with reference to the accompanying drawings in which:
FIG. 1 shows an example of the subject matter described herein;
FIGs 2A and 2B show another example of the subject matter described herein;
FIG. 3 shows another example of the subject matter described herein;
FIGs 4A - 4D show another example of the subject matter described herein;
FIG 5 shows another example of the subject matter described herein;
FIG 6 shows another example of the subject matter described herein;
FIGs 7A and 7B show another example of the subject matter described herein;
FIG. 8 shows another example of the subject matter described herein; and
FIG. 9 shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DETAILED DESCRIPTION

The Figures illustrate examples of a user equipment, UE, comprising means for transmitting, to a network, a multi-antenna port calibration capability indicator for facilitating non-codebook based precoding for uplink communications between the UE and the network, wherein the multi-antenna port calibration capability indicator indicates a capability of the UE to perform relative phase and/or amplitude calibration between multiple antenna ports of the UE.

This provides the technical effect of enabling efficient utilization of non-codebook based operation for 6G with different vendor specific transmission (TX) calibration capabilities. This may be enabled in, for example, SRS, PUSCH, PUCCH operation.

The Figures further illustrate examples of a UE comprising means for determining a multi-antenna port calibration capability of the UE, wherein the multi-antenna port calibration capability depends on a capability of the UE to perform relative phase and/or amplitude calibration between multiple antenna ports of the UE.

The apparatus may be for informing a network of a calibration capability for facilitating non-codebook based precoding for uplink communications between the UE and the network.

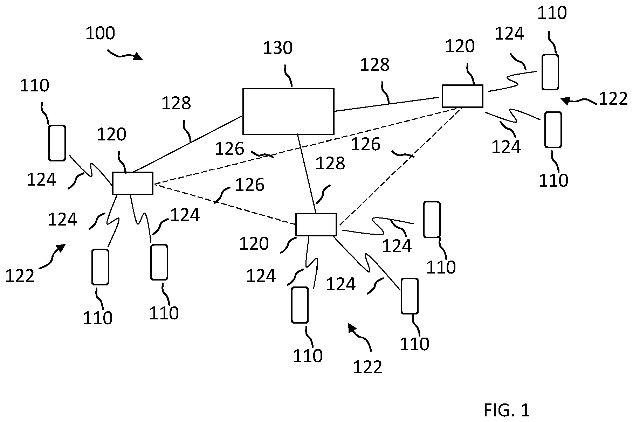

Fig. 1 illustrates an example of a network 100 comprising a plurality of network entities including terminal apparatus 110, node apparatus 120 and one or more network apparatus 130. The terminal apparatus 110 and node apparatus 120 communicate 124 with each other. The one or more network apparatus 130 communicate 128 with the node apparatus 120.

In some examples the one or more network apparatus 130 communicate with the terminal apparatus 110. The one or more network apparatus 130 can, in some examples, communicate with each other. The one or more node apparatus 120 can, in some examples, communicate 126 with each other.

The network 100 can be a cellular network comprising a plurality of cells 122 each served by a node apparatus 120. In this example, the interface between the terminal apparatus 110 and a node apparatus 120 defining a cell 122 is a wireless interface 124.

The node apparatus 120 comprises one or more cellular radio transceivers. The terminal apparatus 110 comprises one or more cellular radio transceivers.

In the example illustrated the cellular network 100 is a third generation Partnership Project (3GPP) network in which the terminal apparatus 110 are user equipment (UE) and the node apparatus 120 can be access nodes such as base stations.

A user equipment comprises a mobile equipment. Where reference is made to user equipment that reference includes and encompasses, wherever possible, a reference to mobile equipment.

In some examples, during operation, a user equipment 110 comprises a mobile equipment comprising a smart card for authentication/encryption etc. such as a Subscriber Identity Module (SIM). In some examples, during operation, a user equipment 110 comprises mobile equipment comprising circuitry embedded as part of the user equipment 110 for authentication/ encryption such as software SIM.

The node apparatus 120 can be any suitable access node such as a base station or transmission reception point. The node apparatus 120 can be a network element responsible for radio transmission and reception in one or more cells 122, to or from the UE 110. The node apparatus 120 can be a network element in a Radio Access Network (RAN), an Open-Radio Access Network (O-RAN) or any other suitable type of network.

The network apparatus 130 can be part of a core network. The network apparatus 130 can be configured to manage functions relating to connectivity for the UEs 110. For example, the network apparatus 130 can be configured to manage functions such as connectivity, mobility, authentication, authorization and/or other suitable functions. In some examples the network apparatus 130 can comprise an Access and Mobility management Function (AMF) and/or a User Plane Function (UPF) or any other suitable entities.

In the example of Fig. 1 the network apparatus 130 is shown as a single entity. In some examples the network apparatus 130 could be distributed across a plurality of entities. For example, the network apparatus 130 could be cloud based or distributed in any other suitable manner. The network apparatus 130 can be a core network node.

The network 100 can be a 4G or 5G network, for example. It can for example be a New Radio (NR) network that uses gNB or eNB as access nodes 120. New Radio is the 3GPP name for 5G technology. In such cases the node apparatus 120 can comprise gNodeBs (gNBs) 120 configured to provide user plane and control plane protocol terminations towards the UE 110 and/or to perform any other suitable functions. The gNBs 120 are interconnected with each other by means of an X2/Xn interface 126. The gNBs are also connected by means of the N2 interface 128 to the network apparatus 130. The gNBs can be connected to an AMF or any other suitable network apparatus 130. Other types of networks and interfaces could be used in other examples. Other types of network could comprise next generation mobile and communication network, for example, a 6G network.

There is ongoing work to support simultaneous transmission (TX) in the uplink (UL) to enable UL MIMO operation.

In UL TX, precoding is applied to signals to compensate for the response (time domain) or transfer function (frequency domain) of the UL channel and of the TX circuitry.

Two transmission schemes are provided for UL TX: codebook-based transmission and non-codebook-based transmission. The transmission scheme used determines how precoding is determined.

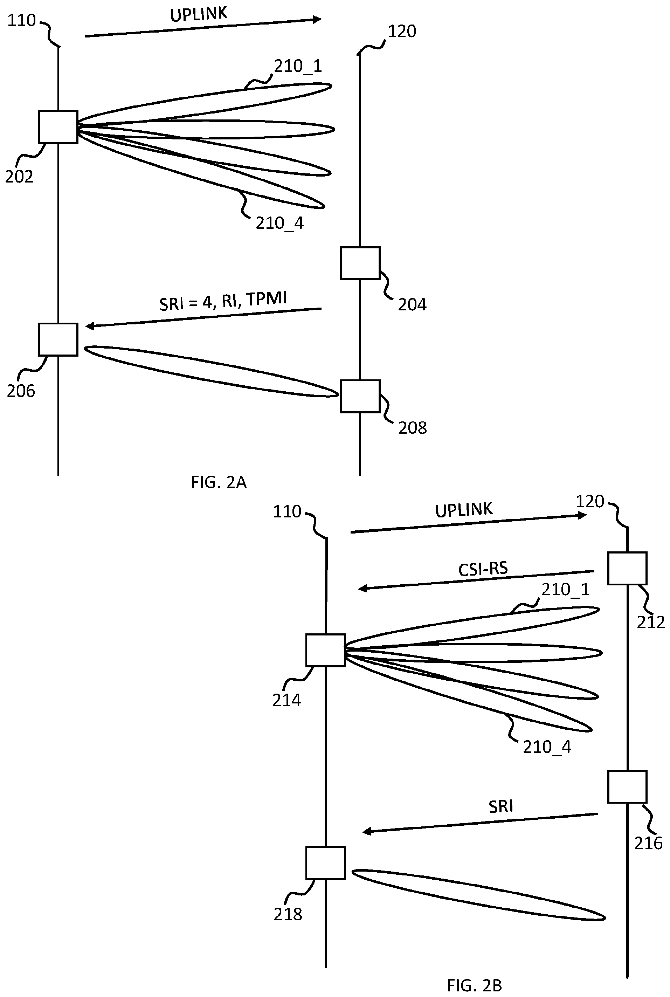

In codebook-based transmission, the network sends a Transmit Precoding Matrix Indicator (TPMI) to the UE to control the UL precoding at the UE. This procedure, illustrated in FIG 2A, comprises:
At block 202, SRS resources 210 are transmitted from UE to the network. The SRS can be sent sequentially or simultaneously, depending on the UE capabilities. However, simultaneously transmitted SRSs will reduce the coverage due to the requirements for maximum combined Tx power at the UE.

At block 204, the network estimates the channel based on previous step and determines best SRS, SRS resource indicator (SRI) and rank.

At block 206, the network transmits the SRI, rank and TPMI to the UE.

At block 208, PUSCH transmission uses the latest indicated precoding at the UE based on previous step.

A drawback of this procedure is that the UE relies on a pre-determined codebook. This codebook was derived under the assumption of Uniform Linear array (ULA) of omni-directional cross pol elements at the UE side leading to a Discrete Fourier Transform (DFT) based "grid of beams" (GOB). However, UE antenna arrays are not uniform and linear as the antenna's patterns have directive variation of gain and phase, as well as inter-antenna distances that are rarely half a wavelength (this can go up to 5 wavelengths for 9 GHz for example). This will result in a non-optimal codebook.

In non-codebook-based transmission, the precoding to be used is determined at the UE by using DL CSI-RS and leveraging DL-UL reciprocity at the UE TX.

This procedure, illustrated in FIG 2B, is based on the following steps:
At block 212, CSI-RSs are sent from the network to the UE, where the UE estimates the channel and calculates a precoder for UL at the UE.

At block 214, pre-coded SRSs are sent in UL with UE generated weights to the network based on previous steps.

At block 216, the network performs a selection of the best SRS and indicates this to the UE using the SRI.

At block 218, PUSCH transmission uses the latest calculated precoding at the UE based on the indicated SRI.

This procedure assumes a full channel reciprocity between UL and DL. However UL phase difference between antenna ports can dynamically vary independently from the DL phase difference.

Therefore, in order for the UE to carry out non-codebook-based transmission, different UE TX antenna ports must be calibrated in the phase and amplitude domains, such that UE-dependent responses/transfer functions may be compensated for by the precoding.

In examples in which UL TX antenna configurations are known and do not vary, full calibration in the phase and amplitude domains may be assumed, and thus non-codebook-based transmission may be carried out.

To enable support for different UL TX antenna configurations, with different calibration assumptions, information about the ability of the UE to calibrate the TX circuitry response/transfer function is required.

SRS transmission is also a prerequisite for non-codebook-based UL MIMO. In this case the UE uses multiple antennas with associated weight coefficients for each precoded SRS.

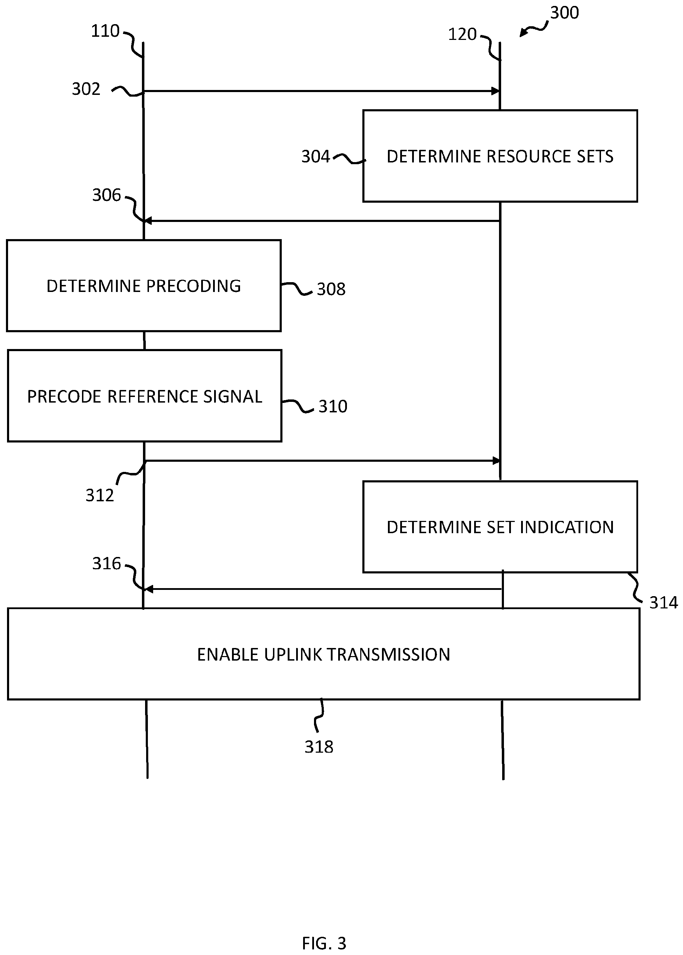

FIG 3 illustrates an example of a method.

In examples, FIG. 3 can be considered to illustrate a plurality of methods. For example, FIG. 3 illustrates one or more actions at a plurality of actors/entities and, in examples, FIG. 3 can be considered to illustrate a plurality of methods performed by the individual actors/entities.

One or more of the features discussed in relation to FIG. 3 can be found in one or more of the other FIGs.

In the example of FIG. 3, a plurality of apparatuses transmit and/or receive one or more signals and/or one or more messages across and/or via and/or using a network. In examples, any suitable form of communication in any suitable network can be used. For example, at least a portion of the network 100 of FIG. 1 can be used.

Accordingly, in examples, the plurality of apparatuses in FIG. 3 form at least a portion of network 100 as described in relation to FIG. 1.

In the illustrated example, a terminal node 110 and an access node 120 transmit and/or receive one or more signals and/or one or more messages. The access node can comprise a gNodeB (gNB) and the terminal node 110 can comprise a UE.

In examples, communications and/or transmissions between elements illustrated in FIG. 3 can proceed via any number of intervening elements, including no intervening elements.

Although one terminal node 110 is illustrated in the example of FIG. 3, in examples any suitable number of terminal nodes 110, for example UEs, can be included. Similarly, in examples, any suitable number of access nodes 120 can be included.

As described herein, a description of a function and/or action should also be considered to disclose enabling, and/or causing, and/or controlling that function and/or action. For example, a description of transmitting information should also be considered to disclose enabling, and/or causing, and/or controlling transmitting/transmission of information.

For example, a description of an apparatus, such as a UE, transmitting information should also be considered to disclose at least one controller of the apparatus enabling, and/or causing, and/or controlling the apparatus to transmit the information.

In the illustrated example, the location of blocks indicates the entity performing the functions(s) and/or action(s). For example, block 302 is performed by the terminal node 110, such as a UE.

Because FIG. 3 illustrates one or more actions/features of transmitting, FIG. 3 illustrates the corresponding receiving/enabling and/or causing receiving action(s)/feature(s).

For the further discussion of FIG. 3 it will be considered that the terminal node 110 is a UE.

From the point of view of the UE, at block 302, the method comprises transmitting, to a network, a multi-antenna port calibration capability indicator for facilitating non-codebook based precoding for uplink communications between the UE and the network.

The multi-antenna port calibration capability indicator indicates a capability of the UE to perform relative phase and/or amplitude calibration between multiple antenna ports of the UE.

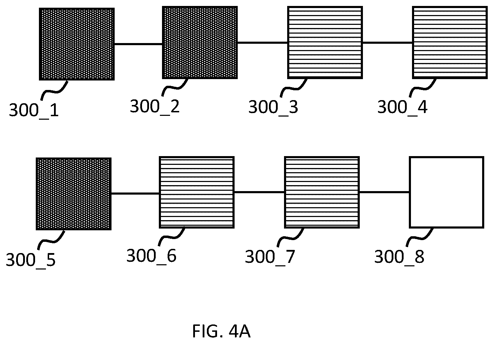

FIGs 4A - 4D illustrate examples of a UE comprising multiple antenna ports. In the example of FIGs 4A - 4D, the UE comprises eight antenna ports.

In some, but not necessarily all, examples, the antenna ports are TX antenna ports. In other examples, the antenna ports comprise TX and RX antenna ports.

Referring back to FIG. 3, in some, but not necessarily all, examples, the multi-antenna port calibration capability indicator indicates, for a combination of two or more antenna ports, a capability of the UE to perform relative phase and/or amplitude calibration between antenna ports of the combination of two or more antenna ports.

In some, but not necessarily all, examples, the multi-antenna port calibration capability indicator indicates, for multiple supported combinations of antenna ports, a capability of the UE to perform relative phase and/or amplitude calibration between multiple antenna ports of the multiple supported combinations of antenna ports.

In some, but not necessarily all, examples, the multi-antenna port calibration capability indicator indicates, for all supported combinations of antenna ports, a capability of the UE to perform relative phase and/or amplitude calibration between multiple antenna ports of all supported combinations of antenna ports.

In some, but not necessarily all, examples, the multi-antenna port calibration capability indicator indicates, for multiple supported combinations of antenna ports, at least one of: a maximum number of fully-calibrated antenna ports; and a maximum number of partially-calibrated antenna ports.

A combination of two or more antenna ports is fully-calibrated if the UE is capable of performing relative phase and/or amplitude calibration between the antenna ports of the combination of two or more antenna ports.

A combination of two or more antenna ports is partially-calibrated if the UE is capable of performing relative phase and/or amplitude calibration between a subset of the antenna ports of the combination of two or more antenna ports or if the UE is capable of performing one, but not both, of relative phase and/or amplitude calibration between the antenna ports or a subset of the antenna ports.

A combination of two or more antenna ports is non-calibrated if the UE is not capable of performing relative phase and/or amplitude calibration between the antenna ports of the combination of two or more antenna ports. In some but not necessarily all examples, it is assumed that a non-calibrated combination of two or more antenna ports cannot be used for non-codebook based transmission. Thus, in some but not necessarily all examples, the multi-antenna port calibration capability indicator does not comprise information about non-calibrated combinations of two or more antenna ports.

In some, but not necessarily all, examples, performing relative phase and/or amplitude calibration between antenna ports compensates for user equipment-dependent transfer functions in phase and/or time domain associated with the different antenna ports.

The UE is therefore capable of performing relative phase and/or amplitude calibration between antenna ports if it is possible to compensate for user equipment-dependent transfer functions in phase and/or time domain associated with the different antenna ports.

In some, but not necessarily all, examples, relative phase calibration comprises delivering multiple timing offsets to multiple antenna ports such that a phase difference between the multiple antenna ports is below a threshold. In examples, the multiple timing offsets are different timing offsets.

The UE is therefore capable of performing relative phase calibration between multiple antenna ports if it is possible to deliver multiple timing offsets to the multiple antenna ports such that a phase difference between the multiple antenna ports is below a threshold.

In some, but not necessarily all, examples, relative amplitude calibration comprises delivering multiple power offsets to multiple antenna ports such that an amplitude difference between the multiple antenna ports is below a threshold. In examples, the multiple power offsets are different power offsets.

The UE is therefore capable of performing relative amplitude calibration between multiple antenna ports if it is possible to deliver multiple power offsets to the multiple antenna ports such that an amplitude difference between the multiple antenna ports is below a threshold.

In examples, the multi-antenna port calibration capability indicator may indicate, for a first combination of two or more antenna ports, a first capability of the UE to perform relative phase and/or amplitude calibration between antenna ports of the first combination of antenna ports, and indicate, for a combination of two or more antenna ports, a second capability of the UE to perform relative phase and/or amplitude calibration between antenna ports of the second combination of two or more antenna ports.

In some but not necessarily all examples, the first combination of two or more antenna ports is different to the second combination of two or more antenna ports. For example, the first combination of two or more antenna ports may comprise different antenna ports to the second combination of two or more antenna ports such that there is no overlap between antenna ports of the first combination of two or more antenna ports and antenna ports of the second combination of two or more antenna ports. Alternatively, the first combination of two or more antenna ports may comprise different antenna ports to the second combination of two or more antenna ports such that the antenna ports of the first combination and the antenna ports of the second combination partially, but not completely, overlap.

In some but not necessarily all examples, the first capability is different to the second capability. For example, the first capability and/or the second capability may be a capability to perform: relative phase calibration but not relative amplitude calibration; relative amplitude calibration but not relative phase calibration; relative phase calibration and relative amplitude calibration; or neither relative phase calibration nor relative amplitude calibration. For example, the first capability and/or the second capability may be full-calibration, partial-calibration, or non-calibration.

In some, but not necessarily all, examples, the multi-antenna port calibration capability indicator indicates a capability of the UE to support non-codebook precoding for a plurality of antenna ports. The UE is able to support non-codebook precoding for fully-calibrated and partially-calibrated combinations of two or more antenna ports, and is not able to support non-codebook precoding for non-calibrated combinations of antenna ports.

In some, but not necessarily all, examples, the multi-antenna port calibration capability indicator indicates a capability of the UE to support non-codebook precoding for a plurality of antenna ports, wherein the UE is able to support non-codebook precoding for fully-calibrated and partially-calibrated combinations of antenna ports associated with at least one of the following: UL SRS, PUSCH, PUCCH.

The multi-antenna port calibration capability indicator indicates that the UE is capable of simultaneously transmitting single antenna port UL SRS resources via UE logical antenna ports associated with a fully calibrated and/or partially calibrated combination of two or more antenna ports.

In the example of FIG. 4A, boxes with dotted fill represent antenna ports which are fully-calibrated together; boxes with striped fill represent antenna ports which are partially-calibrated together; and boxes with no fill represent antenna ports which are non-calibrated together.

Referring back to FIG. 3, at block 306, the method comprises receiving configuration information from a network node of the network, wherein the configuration information comprises one or more antenna port sets, and one or more usage indicators associated with the one or more antenna port sets.

An antenna port set comprises one or more antenna ports, wherein antenna ports of the antenna port set have the same calibration capability indicator. Therefore, an antenna port set may comprise one or more fully-calibrated antenna ports, or one or more partially-calibrated antenna ports. The UE is thus able to perform relative phase and/or amplitude calibration between antenna ports of the antenna port set, or between a subset of antenna ports of the antenna port set.

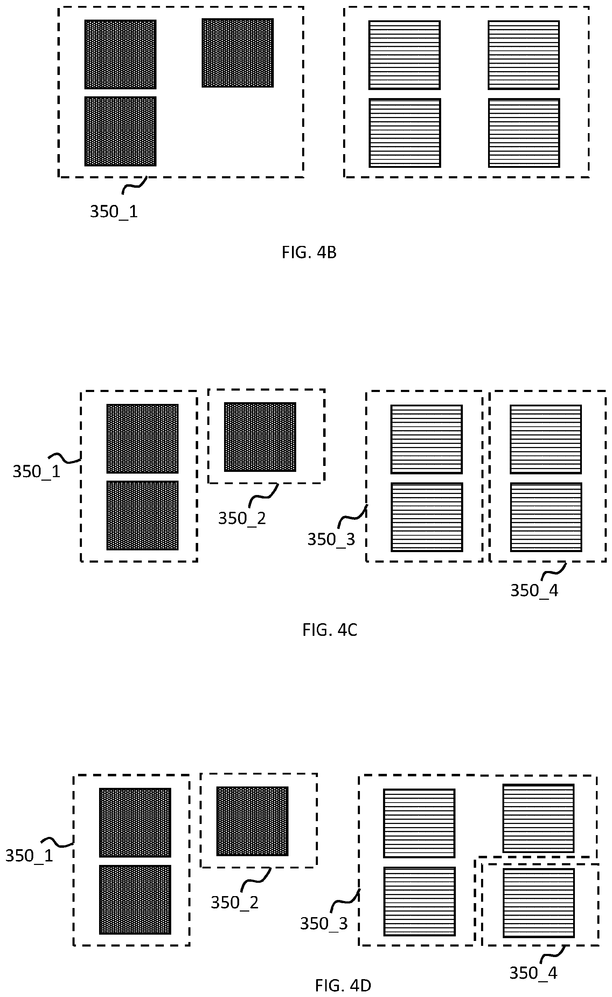

FIGs 4B - 4D illustrate examples of antenna port sets comprising the multiple antenna ports of FIG. 4A.

In FIG 4B, all antenna ports having the same configuration information (fully-calibrated or partially-calibrated) are grouped into a single antenna port set. Thus, there are two antenna port sets.

In FIGs 4C and 4D, multiple, but not all, antenna ports having the same configuration information (fully-calibrated or partially-calibrated) are grouped into a single antenna port set. Thus, there are more than two antenna port sets, each having one or more antenna port.

In FIGs 4B - 4D, no antenna port set having non-calibrated antenna ports is created.

Referring back to FIG. 3, the one or more usage indicators comprise: an indication to use the one or more antenna port sets for codebook or non-codebook precoding for uplink transmission; and a multi-antenna port calibration capability indicator.

At block 308, the method comprises determining precoding for uplink transmission between the UE and the network based on the received configuration information.

In some, but not necessarily all, examples, determining precoding for uplink transmission between the UE and the network based on the received configuration information comprises determining, for a set, precoding for uplink transmission between the UE and the network using the set.

In some examples, the UE determines precoding, for multiple sets, precoding for uplink transmission between the UE and the network using the multiple sets. In some examples, the UE determines precoding, for each set, precoding for uplink transmission between the UE and the network using each set.

At block 310, the method comprises precoding at least one reference signal, to be transmitted using a set, using the determined precoding for the set.

In some examples, the UE precodes multiple reference signals, to be transmitted using multiple sets. In some examples, the UE precodes multiple reference signals, to be transmitted using each set.

At block 312, the method comprises transmitting the at least one precoded reference signal by the set associated with the precoding.

At block 316, the method comprises receiving, from the network, a set indication for indicating which set of the one or more antenna port sets is to be used for UL transmission between the UE and the network.

At block 318, the method comprises enabling UL transmission between the UE and the NW using the indicated set.

In some, but not necessarily all, examples, the uplink transmission is single antenna port UL SRS transmission/non-codebook based PUSCH/PUCCH transmission.

Consequently, FIG. 3 illustrates a method comprising:
transmitting, to a network, a multi-antenna port calibration capability indicator for facilitating non-codebook based precoding for uplink communications between the UE and the network,
wherein the multi-antenna port calibration capability indicator indicates a capability of the UE to perform relative phase and/or amplitude calibration between multiple antenna ports of the UE;
receiving configuration information from a network node of the network, wherein the configuration information comprises one or more antenna port sets, and one or more usage indicators associated with the one or more antenna port sets;
determining precoding for uplink transmission between the UE and the network based on the received configuration information;
precoding at least one reference signal, to be transmitted using a set, using the determined precoding for the set;
transmitting, to the network, the at least one precoded reference signal by the set associated with the precoding;
receiving, from the network, a set indication for indicating which set of the one or more antenna port sets is to be used for uplink transmission between the UE and the network; and enabling uplink transmission between the UE and the network using the indicated antenna port set.

From the point of view of the network node, at block 302, the method comprises receiving, from a UE, a multi-antenna port calibration capability indicator for facilitating non-codebook based precoding for uplink communications between the UE and the network.

At block 304, the method comprises determining, based at least one the received multi-antenna port calibration capability indicator, one or more antenna port sets. An antenna port set comprises one or more antenna ports, wherein antenna ports of the antenna port set have the same calibration capability indicator. Therefore, an antenna port set may comprise one or more fully-calibrated antenna ports, or one or more partially-calibrated antenna ports.

At block 306, the method comprises transmitting configuration information to the UE, wherein the configuration information comprises one or more antenna port sets, and one or more usage indicators associated with the one or more antenna port sets.

The one or more usage indicators comprise: an indication to use the one or more antenna port sets for codebook or non-codebook precoding for uplink transmission; and a multi-antenna port calibration capability indicator.

At block 312, the method comprises receiving, from the UE, the at least one precoded reference signal.

At block 316, the method comprises determining, based on the received at least one precoded reference signal channel estimate, which antenna port set of the one or more antenna port sets is to be used for uplink transmission between the UE and the network.

At block 18, the method comprises transmitting, to the UE, a supergroup indication for indicating which antenna port set of the one or more antenna port sets is to be used for UL transmission between the UE and the network.

At block 322, the method comprises enabling UL transmission between the UE and the NW using the indicated antenna port set.

Consequently, FIG. 3 illustrates a method comprising:
receiving, from a UE, a multi-antenna port calibration capability indicator for facilitating non-codebook based precoding for uplink communications between the UE and the network;
determining, based at least one the received multi-antenna port calibration capability indicator, one or more antenna port sets;
transmitting configuration information to the UE, wherein the configuration information comprises one or more antenna port sets, and one or more usage indicators associated with the one or more antenna port sets;
receiving, from the UE, the at least one precoded reference signal;
determining, based on the received at least one precoded reference signal channel estimate, which antenna port set of the one or more antenna port sets is to be used for uplink transmission between the UE and the network;
transmitting, to the UE, a supergroup indication for indicating which antenna port set of the one or more antenna port sets is to be used for UL transmission between the UE and the network; and
enabling UL transmission between the UE and the NW using the indicated antenna port set.

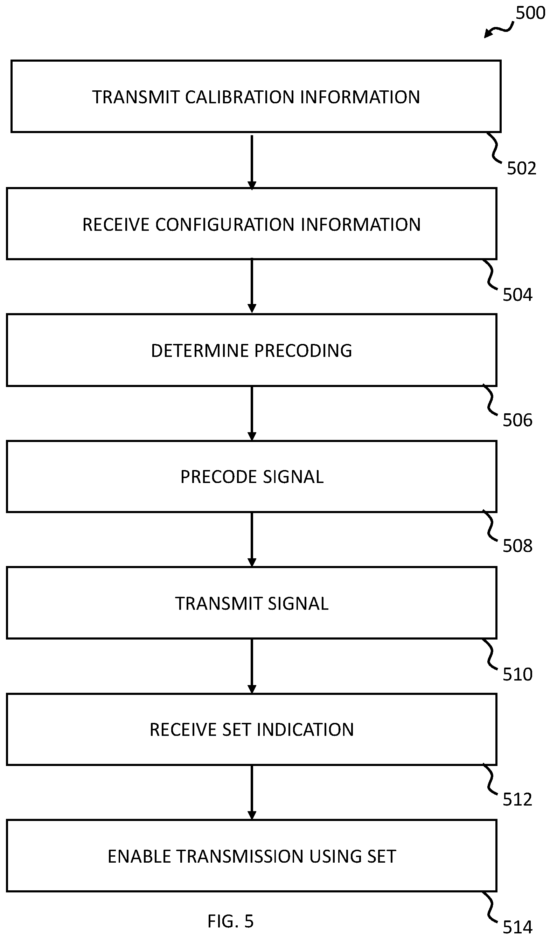

FIG. 5 illustrates an example of a method 500.

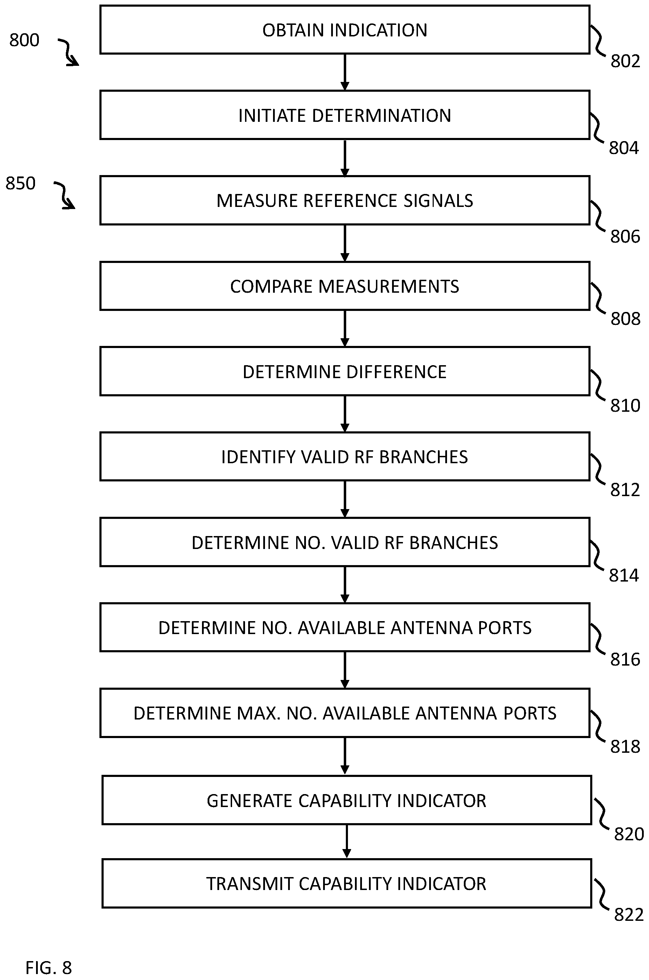

The method can be performed by any suitable apparatus comprising any suitable means for performing the method, for example an apparatus as described in relation to FIG. 8A.

In examples, the method can be performed by a terminal node 110, such as a UE.

At block 502, method 500 comprises transmitting, to a network, a multi-antenna port calibration capability indicator for facilitating non-codebook based precoding for uplink communications between the UE and the network, wherein the multi-antenna port calibration capability indicator indicates a capability of the UE to perform relative phase and/or amplitude calibration between multiple antenna ports of the UE.

At block 504, method 500 comprises receiving configuration information from a network node of the network, wherein the configuration information comprises one or more antenna port sets, and one or more usage indicators associated with the one or more antenna port sets.

At block 506, method 500 comprises determining precoding for uplink transmission between the UE and the network based on the received configuration information.

At block 508, method 500 comprises precoding at least one reference signal, to be transmitted using a set, using the determined precoding for the set.

At block 510, method 500 comprises transmitting, to the network, the at least one precoded reference signal by the set associated with the precoding.

At block 512, method 500 comprises receiving, from the network, a set indication for indicating which set of the one or more antenna port sets is to be used for uplink transmission between the UE and the network.

At block 514, method 500 comprises enabling uplink transmission between the UE and the network using the indicated antenna port set.

Consequently, FIG. 5 illustrates a method comprising:
transmitting, to a network, a multi-antenna port calibration capability indicator for facilitating non-codebook based precoding for uplink communications between the UE and the network,
wherein the multi-antenna port calibration capability indicator indicates a capability of the UE to perform relative phase and/or amplitude calibration between multiple antenna ports of the UE;
receiving configuration information from a network node of the network, wherein the configuration information comprises one or more antenna port sets, and one or more usage indicators associated with the one or more antenna port sets;
determining precoding for uplink transmission between the UE and the network based on the received configuration information;
precoding at least one reference signal, to be transmitted using a set, using the determined precoding for the set;
transmitting, to the network, the at least one precoded reference signal by the set associated with the precoding;
receiving, from the network, a set indication for indicating which set of the one or more antenna port sets is to be used for uplink transmission between the UE and the network; and enabling uplink transmission between the UE and the network using the indicated antenna port set.

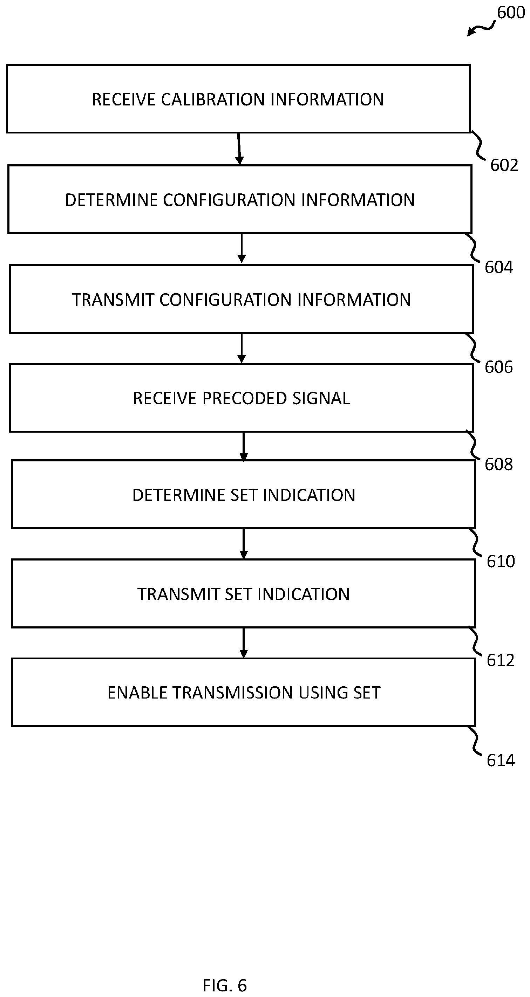

FIG. 6 illustrates an example of a method.

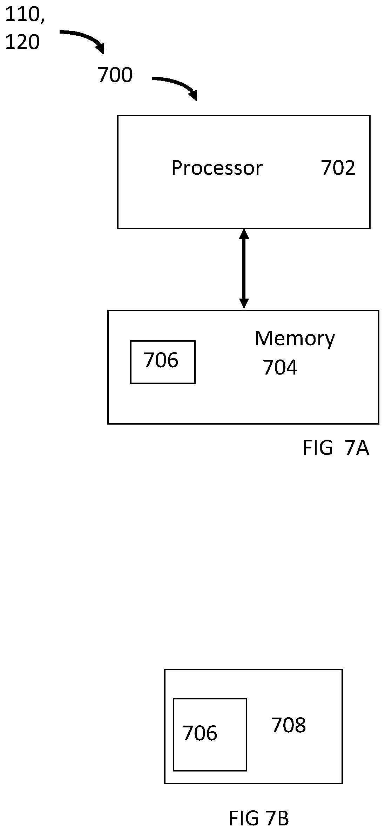

The method can be performed by any suitable apparatus comprising any suitable means for performing the method, for example an apparatus as described in relation to FIG. 7A.

In examples, the method can be performed by an access node 120, such as a gNB.

At block 602, method 600 comprises receiving, from a UE, a multi-antenna port calibration capability indicator for facilitating non-codebook based precoding for uplink communications between the UE and the network.

At block 604, method 600 comprises determining, based at least one the received multi-antenna port calibration capability indicator, one or more antenna port sets.

At block 606, method 600 comprises transmitting configuration information to the UE, wherein the configuration information comprises one or more antenna port sets, and one or more usage indicators associated with the one or more antenna port sets.

At block 608, method 600 comprises receiving, from the UE, the at least one precoded reference signal.

At block 610, method 600 comprises determining, based on the received at least one precoded reference signal channel estimate, which antenna port set of the one or more antenna port sets is to be used for uplink transmission between the UE and the network.

At block 612, method 600 comprises transmitting, to the UE, a supergroup indication for indicating which antenna port set of the one or more antenna port sets is to be used for UL transmission between the UE and the network.

At block 614, method 600 comprises enabling UL transmission between the UE and the NW using the indicated antenna port set.

Consequently, FIG. 6 illustrates a method comprising:
receiving, from a UE, a multi-antenna port calibration capability indicator for facilitating non-codebook based precoding for uplink communications between the UE and the network;
determining, based at least one the received multi-antenna port calibration capability indicator, one or more antenna port sets;
transmitting configuration information to the UE, wherein the configuration information comprises one or more antenna port sets, and one or more usage indicators associated with the one or more antenna port sets;
receiving, from the UE, the at least one precoded reference signal;
determining, based on the received at least one precoded reference signal channel estimate, which antenna port set of the one or more antenna port sets is to be used for uplink transmission between the UE and the network;
transmitting, to the UE, a supergroup indication for indicating which antenna port set of the one or more antenna port sets is to be used for UL transmission between the UE and the network; and
enabling UL transmission between the UE and the NW using the indicated antenna port set.

FIG. 8 illustrates an example of a method 800.

In examples, FIG. 8 can be considered to illustrate a plurality of methods.

The method 800 can be performed by any suitable apparatus comprising any suitable means for performing the method 800, for example an apparatus as described in relation to FIG. 7A.

The method 800 can be performed in combination with one or more of the methods described above. For example, the method 800 may be performed before and/or concurrently with method 300 and/or method 600. Method 800 and methods 300, 600 may be performed by the same apparatus or by different apparatus.

In examples, the method 800 can be performed by a terminal node 110, such as a UE 140.

The method 800 is for determining a multi-antenna port calibration capability of the UE. The method 800 may be considered to comprise a main block 850 comprising determining a multi-antenna port calibration capability of the UE. Blocks 802 - 826 may be sub-blocks of main block 850.

The multi-antenna port calibration capability depends on at least one of: phase calibration; or amplitude calibration of one or more RF branches of the UE.

In some, but not necessarily all, examples, the multi-antenna port calibration capability is, or indicates, a capability of the UE to perform relative phase and/or amplitude calibration between multiple antenna ports of the UE.

In some, but not necessarily all, examples, determining the antenna port calibration capability of the UE comprises determining a capability of the UE to perform relative phase and/or amplitude calibration between multiple antenna ports of the UE.

In some, but not necessarily all, examples, the multi-antenna port calibration capability additionally or alternatively indicates a capability of the UE to perform phase and/or amplitude calibration of one or more RF branches of the UE.

In some, but not necessarily all, examples, determining the multi-antenna port calibration capability comprises generating or otherwise creating a multi-antenna port calibration capability indicator for facilitating non-codebook based precoding for uplink communications between the UE and the network. The multi-antenna port calibration capability indicator indicates a capability of the UE to perform relative phase and/or amplitude calibration between multiple antenna ports of the UE and/or a capability of the UE to perform phase and/or amplitude calibration of one or more RF branches of the UE.

In some, but not necessarily all, examples, determination of the multi-antenna port calibration capability is carried out by the UE at the baseband level.

At block 802, the method 800 comprises obtaining an indication to initiate determination of the multi-antenna port calibration capability.

In some, but not necessarily all, examples, the indication is received from a network node. Determination of the multi-antenna port calibration capability is therefore initiated in dependence upon an instruction from the network.

In some, but not necessarily all, examples, the indication is generated by the UE based on a trigger condition being met. Determination of the multi-antenna port calibration capability is therefore initiated in dependence upon a trigger condition being met. Determination of the multi-antenna port calibration capability may therefore be carried out dynamically, for example during use of the UE.

In some, but not necessarily all, examples, a trigger condition is met if a change is detected by one or more sensors and/or if a change in a measured signal is detected. The one or more sensors may comprise at least one of: a proximity sensor; a motion sensor; or a position sensor. The change in a measured signal may be at least one of: a change in phase; a change in amplitude.

At block 804, the method 800 comprises initiating determination of the multi-antenna port calibration capability in dependence upon obtaining the indication.

At block 806, the method 800 comprises measuring one or more reference signals using one or more antenna ports.

The one or more antenna ports used to measure the one or more reference signals are connected to respective RF branches. An RF branch is connected to one of one or more selectable antenna ports. Thus, by measuring the reference signal at an antenna port connected to an RF branch, information about the RF branch may be obtained.

In some, but not necessarily all, examples, the one or more reference signals are one or more downlink reference signals. In some, but not necessarily all, examples, the one or more reference signals are one or more uplink reference signals. In some, but not necessarily all, examples, the one or more reference signals comprise one or more downlink reference signals and one or more uplink reference signals.

In some, but not necessarily all, examples, the reference signals comprise at least one or more of: a first set of one or more downlink reference signals; a second set of one or more downlink reference signals; and a first set of one or more uplink reference signals. The first set of downlink reference signals and the second set of downlink reference signals may comprise the same, overlapping, or different reference signals. In some, but not necessarily all, examples, the first set of one or more uplink reference signals comprise one or more RF calibration signals.

In examples, blocks 806 - 812 provide a sub-method of method 800 for identifying one or more valid RF branches. Some examples set out under blocks 806 - 812 are described with reference to a single RF branch for clarity; however, it should be appreciated that blocks 806 - 812 may be carried out for multiple RF branches, simultaneously or sequentially.

Thus, in examples, at block 806, the method 800 comprises measuring one or more reference signals using an antenna port connected to an RF branch.

In some, but not necessarily all, examples, the one or more reference signals are measured by one or more combinations of two or more antenna ports.

In some, but not necessarily all, examples, the one or more reference signals are reception reference signals.

In some, but not necessarily all, examples, measuring the one or more reference signals comprises measuring symbols of the one or more reference signals.

In some, but not necessarily all, examples, measuring the one or more reference signals comprises measuring an amplitude and/or a phase of the one or more reference signals.

In some, but not necessarily all, examples, the method 800 comprises measuring one or more downlink reference signals and/or one or more uplink reference signals and/or one or more granted uplink gaps. An uplink gap is an allocation where the UE is not required to transmit to the gNB. Such an uplink gap can be used by the UE to for example perform a TX calibration.

For example, the method 800 may comprise measuring a downlink reference signal and an uplink reference signal at the antenna port connected to the RF branch.

In examples, one or more downlink reference signals of the second set of downlink reference signals are used to characterize/calibrate the RF receiver path.

The transmit path can be characterized/calibrated by the UE transmitting an SRS or a specific TX reference signal for internal characterization. In some, but not necessarily all, examples, one or more uplink reference signals of the first set of uplink reference signals are used to characterise/calibrate the RF transmit path. An uplink gap allocation from the network node may be required for the UE to transmit an internal characterization/calibration signal.

At block 808, the method 800 comprises comparing a measurement of a first measured reference signal against a measurement of a second measured reference signal. The first reference signal is a downlink reference signal or an uplink reference signal. The second reference signal is at least one of: a different measured reference signal; a reference signal measured at a different antenna port to the first measured reference signal; an uplink reference signal; a downlink reference signal; or an expected reference signal.

The measurement of the first reference signal is therefore a measurement of a downlink reference signal. The measurement of the second reference signal is therefore at least one of: a measurement of a different measured reference signal; a measurement of a reference signal measured at a different antenna port to the first measured reference signal; a measurement of an uplink reference signal; a measurement of a downlink reference signal; or a measurement of an expected reference signal.

In examples, the first reference signal is a downlink reference signal measured at an antenna port connected to an RF branch and the second reference signal is an RF calibration signal measured at the antenna port connected to the RF branch.

In some, but not necessarily all, examples, the first reference signal is a downlink reference signal of the first set of downlink reference signals and the second reference signal is a downlink reference signal of the first set of downlink reference signals. In some, but not necessarily all, examples, the first reference signal is a downlink reference signal of the first set of downlink reference signals and the second reference signal is an uplink reference signal of the first set of uplink reference signals.

At block 810, the method 800 comprises determining a difference between the first reference signal and the second reference signal.

In some, but not necessarily all, examples, the method 800 comprises determining a difference between one or more downlink reference signals of the second set of downlink reference signals and one or more uplink reference signals of the first set of uplink reference signals.

By determining a difference between a first (downlink) reference signal measured at an antenna port connected to an RF branch and a second (uplink) reference signal measured at the antenna port connected to the RF branch, a difference between the first (downlink) reference signal and a second (uplink) reference signal at the RF branch is determined. The measurements of the first reference signal and the second reference signal are performed at baseband.

In some, but not necessarily all, examples, the method 800 comprises determining one or more dynamic characteristics of the antenna port connected to the RF branch.

In some, but not necessarily all, examples, the one or more dynamic characteristics comprise at least one of: directivity; complex impedance; angular direction of maximum gain; phase; amplitude.

In examples, a first downlink reference signal can be used to characterize the receiver path on an antenna port connected to an RF branch. In examples, a first downlink reference signal can be used to characterize the receiver path on multiple antenna ports connected to multiple RF branches. The UE reference signals may be sent simultaneously on all transmitting paths or sequentially.

In some, but not necessarily all, examples, the reference signals are compared to determine the relative amplitude and phase difference between the antenna ports. In some such examples, the reference signals are downlink reference signals of the first set of downlink reference signals. Based on this, the UE can apply the correct amplitude and phase values (pre-coding) for the Non-Codebook-Based UL MIMO transmission, as it knows the calibration values for each MIMO/RF branch and the required relative amplitude and phase values between the antenna ports.

At block 812, the method 800 comprises identifying one or more valid RF branches covering a first frequency band.

The identification is based, at least in part, on the comparison of the two or more measured reference signals. For example, the identification may be based, at least in part, on the comparison of the measurement of the first (downlink) measured reference signal and the measurement of the second (uplink) measured reference signal.

In some, but not necessarily all, examples, the identification of a valid RF branch covering a first frequency band is based, at least in part, on a comparison, for an antenna port connected to the RF branch, of a measured downlink reference signal at the antenna port and a measured uplink reference signal at the antenna port. In some, but not necessarily all, examples, the identification of one or more valid RF branches covering a first frequency band is based, at least in part, on a comparison, for all antenna ports of the two or more antenna ports, of a measured downlink reference signal at the antenna port and a measured uplink reference signal at the antenna port.

In some, but not necessarily all, examples, identification of a valid RF branch is based, at least in part, on a comparison of two or more of the second set of downlink reference signals, a comparison of two or more of the first set of uplink reference signals, or a comparison of one or more of the second set of downlink reference signals and the first set of uplink reference signals.

In some, but not necessarily all, examples, an RF branch covering a first frequency band is valid if it is possible to perform relative phase and/or amplitude calibration between at least a subset of the two or more antenna ports

In some, but not necessarily all, examples, an RF branch covering a first frequency band is valid if the UE is capable of performing relative phase and/or amplitude calibration of the Rx path and the Tx path of the RF branch.

By comparing the downlink reference signal (for example, a downlink reference signal of the second set of downlink reference signals) and the uplink reference signal (for example, an uplink reference signal of the first set of uplink reference signals) measured at the antenna port connected to the RF branch, a difference between the Rx path and the Tx path may be determined. In examples, the RF branch is valid if it is possible to compensate for the difference between the Rx path and the Tx path of the RF branch.

In some, but not necessarily all, examples, an RF branch covering a first frequency band is not valid if the UE is not capable of performing relative phase and/or amplitude calibration between the Rx path and the Tx path the RF branch.

In some, but not necessarily all, examples, performing relative phase and/or amplitude calibration between an Rx path and a Tx path of an RF branch compensates for user equipment-dependent transfer functions in phase and/or time domain associated with the Rx path and the Tx path of the RF branch.

In some, but not necessarily all, examples, performing relative phase and/or amplitude calibration between the Rx path and the Tx path of the RF branch comprises applying precoding to a Tx signal to compensate for user-dependent transfer functions in phase and/or time domain associated with the Rx path and the Tx path of the RF branch.

In some, but not necessarily all, examples, relative phase calibration comprises delivering multiple timing offsets to the Rx path and the Tx path of the RF branch such that a phase difference between the Rx path and the Tx path of the RF branch is below a threshold.

In some, but not necessarily all, examples, relative amplitude calibration comprises delivering multiple power offsets to the Rx path and the Tx path of the RF branch such that an amplitude difference between the Rx path and the Tx path of the RF branch is below a threshold.

In some, but not necessarily all, examples, an RF branch covering a first frequency band is valid if phase and/or amplitude are reciprocal between the RX path and the TX path for the two or more antenna ports of the RF branch.

In some, but not necessarily all, examples, a validity of an RF branch covering a first frequency band is based, at least in part, on at least one of: a RF Front End reconfiguration, a coherency of the channel; movement and/or rotation of the UE; a time since the RF branch covering a first frequency band was last calibrated; an RF front end reconfiguration.

At block 814, the method 800 comprises determining, based on the identification of one or more valid RF branches covering a first frequency band, a number of valid RF branches covering the first frequency band.

At block 816, the method 800 comprises determining a number of available antenna ports covering the first frequency band.

In examples, block 816 comprises determining, for a valid RF branch, whether an antenna port, covering the first frequency band and connected to the RF branch, is available. In examples, block 816 comprises determining, for each valid RF branch, whether an antenna port, covering the first frequency band and connected to the RF branch, is available. Thus, in some but not necessarily all examples, the number of available antenna ports covering the first frequency band is equal to the total number of available antenna ports connected to valid RF branches.

In some, but not necessarily all examples, determining a number of available ports covering the first frequency band comprises: determining a number of antenna ports of the UE which cover the first frequency band; and determining how many of the antenna ports covering the first frequency band are in use, for example by another operation. The number of antenna ports covering the first frequency band is determined by subtracting the number of antenna ports which cover the first frequency band in use from the number of antenna ports in use.

In some, but not necessarily all, examples, determining if an antenna port connected to a valid RF branch is available comprises determining if the antenna port is in use, for example by another operation. If the antenna port is not in use, for example by another operation, the antenna port is available.

The other operation may include: multi-RAT-DC, UL-CA, Non-Stand-Alone 5G/6G, or another operation.

At block 818, the method 800 comprises determining a maximum number of available antenna ports for transmission within the first frequency band.

The determination is based at least in part on the determined number of valid RF branches covering the first frequency band and the determined number of antenna ports covering the first frequency band.

In some, but not necessarily all, examples, the maximum number of available antenna ports for transmission within the first frequency band is equal to the determined number of valid RF branches covering the first frequency band if the determined number of available antenna ports covering the first frequency band is equal to, or greater than, the determined number of valid RF branches covering the first frequency band and if all of the available antenna ports covering the first frequency band can be connected to all of the valid RF branches.

In some, but not necessarily all, examples, the maximum number of available antenna ports for transmission within the first frequency band is equal to the lower of the determined number of valid RF branches covering the first frequency band and the determined number of available antenna ports covering the first frequency band.

In some, but not necessarily all, examples, the method 800 comprises determining at least one of: a maximum number of fully-calibrated antenna ports available for transmission; or a maximum number of partially-calibrated antenna ports available for transmission.

The maximum number of fully-calibrated antenna ports available for transmission and/or the maximum number of partially-calibrated antenna ports available for transmission is dependent on the possible combinations of antenna ports for transmission.

In some, but not necessarily all examples, determining a maximum number of available, fully-calibrated antenna ports and/or a maximum number of available, partially-calibrated antenna ports comprises determining a difference between one or more dynamic characteristics of a first antenna port of the two or more antenna ports and one or more corresponding dynamic characteristics of a second antenna port of the two or more antenna ports. Determination of the difference is based, at least in part, on a comparison of a measurement of a downlink reference signal measured at the first antenna port and a measurement of a downlink reference signal measured at the second antenna port.

In some, but not necessarily all examples, determining a maximum number of available, fully-calibrated antenna ports and/or a maximum number of available, partially-calibrated antenna ports comprises determining a relative phase and/or amplitude difference between two or more antenna ports. The determination is based on a comparison of one or more downlink reference signals of the first set of downlink reference signals.

In some, but not necessarily all examples, determining a maximum number of available, fully-calibrated antenna ports and/or a maximum number of available, partially-calibrated antenna ports comprises determining a difference between one or more dynamic characteristics of a first combination of two or more antenna ports and one or more corresponding dynamic characteristics of a second combination of two or more antenna ports. Determination of the difference is based, at least in part, on a comparison of a measurement of a downlink reference signal measured at the first combination of two or more antenna ports and a measurement of a downlink reference signal measured at the second combination of two or more antenna ports. The downlink reference signal could be the same or different downlink reference signals.

At block 820, the method comprises generating the multi-antenna port calibration capability indicator. In examples, the multi-antenna port calibration capability indicator is a multi-antenna port calibration capability indicator as described above.

Generating the multi-antenna port calibration capability indicator comprises generating an indication of the number of available antenna ports for transmission within the first frequency band.

In some, but not necessarily all, examples, the multi-antenna port calibration capability indicator indicates, for multiple supported combinations of antenna ports, at least one of: the maximum number of fully-calibrated antenna ports available for transmission within the first frequency band and the maximum number of partially-calibrated antenna ports available for transmission within the first frequency band.

In some, but not necessarily all, examples, the multi-antenna port calibration capability indicator indicates a number of antenna ports, connected to valid RF branches, available for transmission.

The multi-antenna port calibration capability indicator thus enables identification of which RF branches may be calibrated.

At block 822, the method 800 comprises transmitting the multi-antenna port calibration capability indicator to the network. In some examples, block 826 is carried out as block 302 of method 300 and/or as block 602 of method 600.

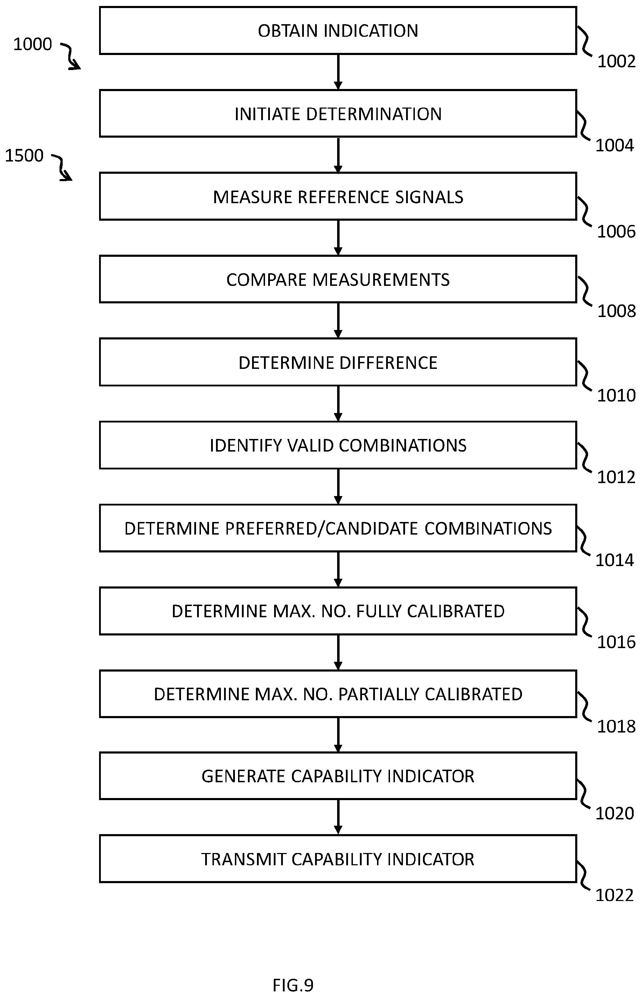

Consequently, FIG. 8 illustrates a method 800 of determining a multi-antenna port calibration capability of the UE, comprising:
obtaining an indication to initiate determination of the multi-antenna port calibration capability;
initiating determination of the multi-antenna port calibration capability in dependence upon obtaining the indication;
measuring one or more reference signals using one or more antenna ports;
comparing a measurement of a first measured reference signal against a measurement of a second measured reference signal;
determining a difference between one or more dynamic characteristics of a first antenna port of the two or more antenna ports and one or more corresponding dynamic characteristics of a second antenna port of the two or more antenna ports;
identifying one or more valid RF branches covering a first frequency band;
determining, based on the identification of one or more valid RF branches covering a first frequency band, a number of valid RF branches covering the first frequency band; determining a number of available antenna ports covering the first frequency band; determining a maximum number of available antenna ports for transmission within the first frequency band;
generating the multi-antenna port calibration capability indicator; and
transmitting the multi-antenna port calibration capability indicator to the network. FIG. 9 illustrates an example of a method 1000.

In examples, FIG. 9 can be considered to illustrate a plurality of methods.

The method 1000 can be performed by any suitable apparatus comprising any suitable means for performing the method 1000, for example an apparatus as described in relation to FIG. 7A.

The method 1000 can be performed in combination with one or more of the methods described above. For example, the method 1000 may be performed before and/or concurrently with method 300 and/or method 600. Method 1000 and methods 300, 600 may be performed by the same apparatus or by different apparatuses.

In examples, the method 1000 can be performed by a terminal node 110, such as a UE 140.

The method 1000 is for determining an antenna port calibration capability of the UE. The method 1000 may be considered to comprise a main block 1050 comprising determining an antenna port group calibration capability of the UE. Blocks 1002 - 1024 may be sub-blocks of main block 1050.

The antenna port calibration capability depends on at least one of: phase calibration; or amplitude calibration of one or more combinations of two or more antenna ports of the UE.

In some, but not necessarily all, examples, the antenna port calibration capability is, or indicates, a capability of the UE to perform relative phase and/or amplitude calibration between multiple antenna ports of the UE.

In some, but not necessarily all, examples, determining the antenna port calibration capability of the UE comprises determining a capability of the UE to perform relative phase and/or amplitude calibration between multiple antenna ports of the UE.

In some, but not necessarily all, examples, determining the antenna port calibration capability comprises generating or otherwise creating an antenna port calibration capability indicator associated with non-codebook-based precoding for uplink communications between the UE and a network. The antenna port calibration capability indicator indicates a capability of the UE to perform relative phase and/or amplitude calibration between multiple antenna ports of the UE. In examples, the antenna port calibration capability indicator is an antenna port calibration capability as described above.

In some, but not necessarily all, examples, determination of the antenna port group calibration capability is carried out by the UE at the baseband level.

At block 1002, the method 1000 comprises obtaining an indication to initiate determination of the antenna port calibration capability.

In some, but not necessarily all, examples, the indication is received from a network node. Determination of the antenna port calibration capability is therefore initiated in dependence upon an instruction from the network.

In some, but not necessarily all, examples, the indication is generated by the UE based on a trigger condition being met. Determination of the antenna port calibration capability is therefore initiated in dependence upon a trigger condition being met. Determination of the antenna port calibration capability may therefore be carried out dynamically, for example during use of the UE.

In some, but not necessarily all, examples, a trigger condition is met if a change is detected by one or more sensors and/or if a change in a measured signal is detected. The one or more sensors may comprise at least one of: a proximity sensor; a motion sensor; or a position sensor. The change in a measured signal may be at least one of: a change in phase; a change in amplitude.

At block 1004, the method 1000 comprises initiating determination of the antenna port calibration capability in dependence upon obtaining the indication.

At block 1006, the method 1000 comprises measuring one or more reference signals using one or more antenna ports.

In some, but not necessarily all examples, the one or more reference signals are measured by one or more combinations of two or more antenna ports.

In some, but not necessarily all, examples, the one or more reference signals are reception reference signals.

In some, but not necessarily all, examples, measuring the one or more reference signals comprises measuring symbols of the one or more reference signals.

In some, but not necessarily all, examples, measuring the one or more reference signals comprises measuring an amplitude and/or a phase of the one or more reference signals.

In some, but not necessarily all, examples, the method 1000 comprises measuring one or more downlink reference signals and/or one or more uplink reference signals and/or one or more uplink signals during granted uplink gaps. The downlink reference signals may be used to characterize/calibrate the RF receiver path. The transmit path can be characterized/calibrated by the UE transmitting an SRS or a specific TX reference signal for internal characterization. An uplink gap allocation from the network node is required for the UE to transmit an internal characterization/calibration signal.

At block 1008, the method 1000 comprises comparing a measurement of a first measured reference signal against a measurement of a second measured reference signal. The first reference signal is a downlink reference signal. The second reference signal is at least one of: a different measured reference signal; a reference signal measured at a different antenna port to the first measured reference signal; an uplink reference signal; or an expected reference signal.

The measurement of the first reference signal is therefore a measurement of a downlink reference signal. The measurement of the second reference signal is therefore at least one of: a measurement of a different measured reference signal; a measurement of a reference signal measured at a different antenna port to the first measured reference signal; a measurement of an uplink reference signal; or a measurement of an expected reference signal.

In some, but not necessarily all, examples, the first measured reference signal is a downlink reference signal measured at two or more antenna ports and the second measured reference signal is an uplink reference signal measured at one or more antenna ports.

At block 1010, the method 1000 comprises determining a difference between one or more dynamic characteristics of two or more antenna ports based, at least in part, on a comparison of a measurement of one or more downlink reference signals measured at the first antenna port and the second antenna port.

In some, but not necessarily all, examples, the method 1000 comprises determining a difference between one or more dynamic characteristics of a first antenna port of the two or more antenna ports and one or more corresponding dynamic characteristics of a second antenna port of the two or more antenna ports. Determination of the difference is based, at least in part, on a comparison of a measurement of one or more uplink reference signals measured at the first antenna port and a measurement of one or more uplink reference signals measured at the second antenna port.

In some, but not necessarily all, examples, the method 1000 comprises determining a difference between one or more dynamic characteristics of the first antenna port of the two or more antenna ports and one or more corresponding dynamic characteristics of a third antenna port of the two or more antenna ports. Determination of the difference is based, at least in part, on a comparison of a measurement of the downlink reference signal measured at the first antenna port and a measurement of a downlink reference signal measured at the third antenna port.

In some, but not necessarily all, examples, the method 1000 comprises determining a difference between one or more dynamic characteristics of a first combination of two or more antenna ports and one or more corresponding dynamic characteristics of a second combination of two or more antenna ports. Determination of the difference is based, at least in part, on a comparison of a measurement of a downlink reference signal measured at the first combination of one or more antenna ports and a measurement of a downlink reference signal measured at the second combination of one or more antenna ports.

In some, but not necessarily all, examples, the one or more dynamic characteristics comprise at least one of: directivity; complex impedance; angular direction of maximum gain; phase; amplitude.

In examples, a first downlink reference signal can be used to characterize the receiver path on all antenna ports. The UE reference signals may be sent simultaneously on all transmitting paths or sequentially.

In some, but not necessarily all, examples, the DL signals are used to measure the relative amplitude and phase difference between the antenna ports. Based on this, the UE can apply the correct amplitude and phase values (pre-coding) for the Non-Codebook-Based UL MIMO transmission, as it knows the calibration values for each MIMO/RF branch and the required relative amplitude and phase values between the antenna ports.

At block 1012, the method 1000 comprises identifying one or more valid combinations of two or more antenna ports.

The identification is based, at least in part, on the comparison of two or more reference signals. For example, the identification may be based, at least in part, on the comparison of the measurement of the first measured reference signal and the measurement of the second measured reference signal.

In some, but not necessarily all, examples, the identification of one or more valid combinations of two or more antenna ports is based, at least in part, on a comparison, for multiple antenna ports of the two or more antenna ports, of a measured downlink reference signal at the antenna port and a measured uplink reference signal at the antenna port. In some, but not necessarily all, examples, the identification of one or more valid combinations of two or more antenna ports is based, at least in part, on a comparison, for all antenna ports of the two or more antenna ports, of a measured downlink reference signal at the antenna port and a measured uplink reference signal at the antenna port.

In some, but not necessarily all, examples, the identification of one or more valid combinations of two or more antenna ports is based, at least in part, on a comparison of one or more first reference signals measured at a first antenna port of the two or more antenna ports and one or more second reference signals measured at a second antenna port of the two or more antenna ports.

In some, but not necessarily all, examples, a combination of two or more antenna ports is valid if it is possible to perform relative phase and/or amplitude calibration between at least a subset of the two or more antenna ports.

In some, but not necessarily all, examples, a combination of two or more antenna ports is valid and its calibration capability is fully-calibrated if the UE is capable of performing relative phase and/or amplitude calibration between the two or more antenna ports. In some examples, a combination of two or more antenna ports is valid and its calibration capability is fully-calibrated if the UE is capable of performing relative phase and/or amplitude calibration between all antenna ports.

In some, but not necessarily all, examples, a combination of two or more antenna ports is valid and its calibration capability is partially-calibrated if the UE is capable of performing relative phase and/or amplitude calibration between a subset of the two or more antenna ports. In some examples, a combination of two or more antenna ports is valid and its calibration capability is partially-calibrated if the UE is capable of performing relative phase and/or amplitude calibration between some, but not all, antenna ports.

In some, but not necessarily all, examples, a combination of two or more antenna ports is not valid and its calibration capability is non-calibrated if the UE is not capable of performing relative phase and/or amplitude calibration between the two or more antenna ports.

In some, but not necessarily all, examples, performing relative phase and/or amplitude calibration between antenna ports compensates for user equipment-dependent transfer functions in phase and/or time domain associated with the different antenna ports .

In some, but not necessarily all, examples, relative phase calibration comprises delivering multiple timing offsets to multiple antenna ports such that a phase difference between the multiple antenna ports is below a threshold.

In some, but not necessarily all, examples, relative amplitude calibration comprises delivering multiple power offsets to the multiple antenna ports such that an amplitude difference between the multiple antenna ports is below a threshold.

In some, but not necessarily all, examples, a combination of two or more antenna ports is valid if phase and amplitude are reciprocal between the RX path and the TX path for the two or more antenna ports.

In some, but not necessarily all, examples, a validity of a combination of two or more antenna ports is based, at least in part, on at least one of: a coherency of the channel; movement and/or rotation of the UE; a time since the combination of two or more antenna ports was last calibrated; an RF front end reconfiguration.

At block 1014, the method 1000 comprises determining at least one of: one or more preferred combinations of one or more antenna ports; or one or more candidate combinations of one or more antenna ports. The determination is based at least in part on the identified one or more valid combinations of two or more antenna ports.

In some, but not necessarily all, examples, a preferred combination of one or more antenna ports is a combination of antenna ports with a best expected performance of the one or more combinations of one or more antenna ports. For example, a preferred combination of one or more antenna ports may have one or more of: a highest number of fully-calibrated antenna ports; a highest RSRP.

In some, but not necessarily all, examples, a candidate combination of one or more antenna ports is a combination of one or more antenna ports which may be used as an alternative to a serving combination of one or more antenna ports. For example, if a performance of a serving combination of one or more antenna ports drops below a threshold, the candidate combination of one or more antenna ports may become a new serving combination of one or more antenna ports. The new serving combination of one or more antenna ports may replace the previous serving combination of one or more antenna ports, or may serve in addition to the previous serving combination of one or more antenna ports.

In some, but not necessarily all, examples, antenna ports of a candidate combination of one or more antenna ports are calibrated before the candidate combination of one or more antenna ports becomes a serving combination of one or more antenna ports. In other examples, antenna ports of a candidate combination of one or more antenna ports are calibrated after the candidate combination of one or more antenna ports is selected to be used as a serving combination of one or more antenna ports.

In some, but not necessarily all, examples, determining one or more preferred combinations and/or one or more candidate combinations of one or more antenna ports is based on a calibration capability of the one or more combinations of one or more antenna ports.

In some, but not necessarily all, examples, one or more valid and fully-calibrated combinations of one or more antenna ports are selected as preferred combinations and/or candidate combinations in preference to one or more valid and partially-calibrated combinations of one or more antenna ports.

In some, but not necessarily all, examples, one or more valid and partially-calibrated combinations of one or more antenna ports are selected as preferred combinations and/or candidate combinations in preference to one or more not valid and non-calibrated combinations of antenna ports.

In some, but not necessarily all, examples, determining one or more preferred combinations and/or one or more candidate combinations of antenna ports comprises measuring an RSRP of the one or more valid combinations of one or more antenna ports.

In some such examples, determination of the one or more preferred combinations and/or one or more candidate combinations is based, at least in part, on the measured RSRP. In some, but not necessarily all, examples, the one or more preferred combinations and/or one or more candidate combinations is selected in dependence upon one or more highest measured RSRPs.

At block 1016, the method comprises determining a maximum number of valid combinations of antenna ports which are fully-calibrated.

At block 1018, the method comprises determining a maximum number of valid combinations of antenna ports which are partially-calibrated.

The determination of blocks 1016 and 1018 are based on the identification of one or more valid combinations of two or more antenna ports.

At block 1020, the method 1000 comprises generating the antenna port calibration capability indicator.

Generating the antenna port calibration capability indicator comprises generating an indication of: the maximum number of valid combinations of antenna ports which are fully-calibrated and/or the maximum number of valid combinations of antenna ports which are partially-calibrated.

The antenna port group calibration capability indicator therefore provides phase and amplitude information for different antenna ports. The antenna port group calibration capability indicator thus enables identification of which antenna ports may be calibrated.

At block 1022, the method 1000 comprises transmitting the antenna port calibration capability indicator to the network. In some examples, block 1024 is carried out as block 302 of method 300 and/or as block 602 of method 600.

Consequently, FIG. 9 illustrates a method 1000 of determining an antenna port calibration capability of the UE, comprising:
obtaining an indication to initiate determination of the antenna port calibration capability;
initiating determination of the antenna port calibration capability;
measuring one or more reference signals using one or more antenna ports;
comparing a measurement of a first measured reference signal against a measurement of a second measured reference signal;
determining a difference between one or more dynamic characteristics of a first antenna port of the two or more antenna ports and one or more corresponding dynamic characteristics of a second antenna port of the two or more antenna ports;
identifying one or more valid combinations of two or more antenna ports;
determining at least one of: one or more preferred combinations of one or more antenna ports, or one or more candidate combinations of one or more antenna ports;
determining a maximum number of valid combinations of antenna ports which are fully-calibrated;
determining a maximum number of valid combinations of antenna ports which are partially-calibrated;
generating an antenna port calibration capability indicator; and
transmitting the antenna port calibration capability indicator to the network.

In some, but not necessarily all, embodiments, the UE provides capability report (e.g. via RRC/MAC-level signaling) indicating TX antenna port calibration information, specifically one or more single antenna port UL SRS resource(s) for non-codebook based PUSCH and/or PUCCH and/or UL SRS resource transmission with supported UE TX antenna port numbers. The capability indication includes at least one of the following:
'Fully-Calibrated' TX antenna ports for single antenna port UL SRS:
The UE reports for all supported number of UE TX antenna port combinations the maximum number of single antenna port UL resources which satisfies "fully-calibrated" TX antenna ports, where fully-calibrated means that antenna ports are in phase and/or amplitude fully-calibrated.

Both the UE and the network can assume that the UE can transmit simultaneously the reported maximum number of single antenna port SRS resources.

'Partially-Calibrated' TX antenna ports for single antenna port UL SRS:
The UE reports for all supported number of UE TX antenna port combinations the maximum number of single antenna port UL resources which satisfies "partially-calibrated" TX antenna ports, where partially-calibrated means that part of antenna ports (i.e. more than one) are in phase and/or amplitude fully-calibrated.

Both the UE and the network can assume that the UE can transmit simultaneously the reported maximum number of single antenna port SRS resources.

The UE is not assumed to report single antenna port UL SRS resources for 'non-calibrated' TX ports.

It is up to UE vendor specific implementation how many actual UE TX antenna ports are captured within one single antenna port SRS resource (s.t. TX calibration information capability, i.e. 'Fully-Calibrated'/ Partially-Calibrated'/'non-calibrated'.

UE TX antenna ports are logical antenna port which are associated with physical UE TX antenna arrangements e.g. antenna elements/antenna connectors/radiators/antenna panels.

After the UE has indicated TX antenna port calibration capability information specifically for a set of single antenna port UL SRS resource(s) for non-codebook based PUSCH and/or PUCCH and/or UL SRS resource, the network may configure the UE with one or multiple UL SRS resource sets with usage 'nonCodebook' and associated non-zero power (NZP)-Channel State Information (CSI) resource as well as TX-Calibration information element with info as 'Fully-Calibrated' or 'Partially-Calibrated'.

For example, the UE has indicated via capability reporting that the UE has TX antenna port calibration capability for single antenna port SRS resource as following:
16TX with 'fully-calibrated' in both phase and amplitude domain 4 UL SRS resource w/ 1-AP,
16TX with 'partially-calibrated' in amplitude domain 8 UL SRS resources w/ 1-AP
8TX with 'fully-calibrated' in both phase and amplitude domain 8 UL SRS resources w/ 1-AP,
8TX with 'partially-calibrated' in both phase and amplitude domain 16 UL SRS resources w/ 1-AP
4TX with 'fully-calibrated' in both phase and amplitude domain 8-AP UL SRS resources,
4TX with 'partially-calibrated' in both phase and amplitude domain 16 1-AP UL SRS resources

Then, to enable 16 TX single antenna port non-codebook UL SRS channel sounding (including rank and MCS selection) transmission for non-codebook based PUSCH with different TX antenna port calibration capabilities, based on the TX capability report for single port UL SRS, the network may configure the UE with 2 UL SRS resource sets, where the UL SRS resource set#1 is configured with usage 'non-codebook' and with TX-calibration info ='Fully-Calibrated' as well as NZP-CSI-RS reference signal resource identified (CRI) #3 is associated with UL SRS resource set#1. UL SRS resource set#1 has four 1-AP UL SRS resources which the UE can transmit in full calibrated manner in phase and amplitude domain. The UE is also configured with the second UL SRS resource set#2, with usage 'non-codebook' and with TX-calibration info ='Partially-Calibrated' in amplitude domain as well as NZP-CSI-RS reference signal resource identified (CRI) #1 is associated with UL SRS resource set#2. UL SRS resource set#2 has 8 1-AP UL SRS resources which the UE can transmit in partially calibrated manner in amplitude domain (i.e. assuming antenna port to be fully-calibrated in phase domain).

Now, according to UL SRS resource set#1 configuration, the UE shall determine based on the configured downlink reference signal resource uplink four different rank-1 precoders for the simultaneous transmission of four 16 TX single antenna port UL SRS resources for the network. Based on the UL SRS resource set#1 configuration with Tx-Calibration infor ='Fully-Calibrated', the network may assume that it can perform channel estimation and corresponding UL SRS resource selection by assuming "fully-calibrated TX antenna ports".

Similarly, according to UL SRS resource set#2 configuration, the UE shall determine based on the configured downlink reference signal resource uplink 8 different rank-1 precoders for the simultaneous transmission of four 16 TX single antenna port UL SRS resources for the network. The UE shall perform precoder determination such that it takes into account "partially-calibrated" TX antenna ports in amplitude domain. Based on the UL SRS resource set#2 configuration with Tx-Calibration infor ='Partially-Calibrated', the network may assume that it can perform channel estimation and corresponding UL SRS resource selection by assuming "partially-calibrated TX antenna ports" in amplitude domain.

Depending on network scheduler implementation, the scheduler can now select whether to schedule the UE to use rank-4 PUSCH transmission with fully-calibrated TX antennas or rank-8 PUSCH transmission with "partially-calibrated" TX antennas. Once the network has decided which one to apply for upcoming PUSCH transmission, the actual DCI based SRS resource indicator (SRI) indication framework can be used as in legacy NR system.

The number of available Tx APs on a UE for a non-codebook based UL MIMO transmission at a specific frequency will depend on the following:
Number of RF-Branches supporting the required frequency:
This will determine the maximum number of Tx APs, assuming the UE has the same or a higher number of antennas supporting the specific frequency and that they can be connected to all of the identified RF-Branches (Tx AP);

Do the RF-Branch connected to the APs have a valid Rx to Tx calibration;

How many suitable antennas are available for that frequency range?

This can be limited by other configured RRC connections at the UE, like Multi-RAT-DC, UL-CA, Non-Stand-Alone 5G/6G and etc. These additional RRC connections at a some or different frequency may occupy one or more RF-Branches and/or antennas that may or may not be available for a non-codebook based UL MIMO transmission at a specific frequency. This depends partly on UE implementation and on the current resource allocation for those RRC connections.

A procedure for the UE to determine the number of available Tx Antenna Ports for Non-Codebook-Based UL MIMO at a specific frequency is described below.

### The UE receives a txConfig for 'Noncodebook' UL MIMO via RRC

The UE determines the number of valid Rx to Tx calibrated RF-Branches covering the specific frequency.

The UE determines the number of available Antennas covering the specific frequency.

The lowest values of available RF-Branched or Antennas will determine the number of available Tx APs for the specific non-codebook based UL MIMO transmission at a specific frequency.

The derived number of available Tx APs is communicated to the gNB as described in the sections above.

FIG. 3 illustrates methods performed by a system comprising interaction between different system entities. FIG. 3 also illustrates a collection of separate methods performed separately by the different system entities.

Fig 7A illustrates an example of a controller 700 suitable for use in an apparatus 110, 120. Implementation of a controller 700 may be as controller circuitry. The controller 700 may be implemented in hardware alone, have certain aspects in software including firmware alone or can be a combination of hardware and software (including firmware). The controller may be a controller of an apparatus or device such as a terminal node 110, for example a UE, or an access node, for example a gNB.

In examples, the controller can be comprised in an electronic device. Accordingly, in examples, there is provided an electronic device comprising a controller as described herein.

Implementation of a controller 700 may be as controller circuitry. The controller 700 may be implemented in hardware alone, have certain aspects in software including firmware alone or can be a combination of hardware and software (including firmware).

As illustrated in Fig 7A the controller 700 may be implemented using instructions that enable hardware functionality, for example, by using executable instructions 706 in a general-purpose or special-purpose processor 702 that may be stored on a machine readable storage medium (disk, memory etc.) to be executed by such a processor 702.

The processor 702 is configured to read from and write to the memory 704. The processor 702 may also comprise an output interface via which data and/or commands are output by the processor 702 and an input interface via which data and/or commands are input to the processor 702.

The memory 704 sores instructions, program, or code 706 that controls the operation of the apparatus 110, 120 when loaded into the processor 702. The computer program instructions, program or code 706, provide the logic and routines that enables the apparatus 110, 120 to perform the methods illustrated in the accompanying FIGs. The processor 702 by reading the memory 704 is configured to load and execute the instructions, program, or code 706.

In some examples, the controller 700 is or is comprised in the UE 110. In some such examples, the apparatus 110, 120 comprises:
at least one processor 702; and
at least one memory 704 storing instructions that, when executed by the at least one processor 702, cause the apparatus at least to:
   transmit, to a network, a multi-antenna port calibration capability indicator for facilitating non-codebook based precoding for uplink communications between the UE and the network,
   wherein the multi-antenna port calibration capability indicator indicates a capability of the UE to perform relative phase and/or amplitude calibration between multiple antenna ports of the UE;
   receive configuration information from a network node of the network, wherein the configuration information comprises one or more antenna port sets, and one or more usage indicators associated with the one or more antenna port sets;
   determine precoding for uplink transmission between the UE and the network based on the received configuration information;
   precode at least one reference signal, to be transmitted using a set, using the determined precoding for the set;
   transmit, to the network, the at least one precoded reference signal by the set associated with the precoding;
   receive, from the network, a set indication for indicating which set of the one or more antenna port sets is to be used for uplink transmission between the UE and the network; and enable uplink transmission between the UE and the network using the indicated antenna port set.

In some examples, the controller 700 is or is comprised in the UE 110. In some such examples, the apparatus 110, 120 comprises:
at least one processor 702; and
at least one memory 704 storing instructions that, when executed by the at least one processor 702, cause the apparatus at least to:
   obtain an indication to initiate determination of the multi-antenna port calibration capability;
   initiate determination of the multi-antenna port calibration capability in dependence upon obtaining the indication;
   measure one or more reference signals using one or more antenna ports;
   compare a measurement of a first measured reference signal against a measurement of a second measured reference signal;
   determine a difference between one or more dynamic characteristics of a first antenna port of the two or more antenna ports and one or more corresponding dynamic characteristics of a second antenna port of the two or more antenna ports;
   identify one or more valid RF branches covering a first frequency band;
   determine, based on the identification of one or more valid RF branches covering a first frequency band, a number of valid RF branches covering the first frequency band;
   determine a number of available antenna ports covering the first frequency band;
   determine a maximum number of available antenna ports for transmission within the first frequency band;
   determine a maximum number of fully-calibrated antenna ports available for transmission within the first frequency band;
   determine a maximum number of partially-calibrated antenna ports available for transmission within the first frequency band;
   generate the multi-antenna port calibration capability indicator; and
   transmit the multi-antenna port calibration capability indicator to the network.

In some examples, there is a (computer implemented) system comprising a UE and a network node 120, the UE and/or the network node 120 comprising means for:
controlling transmission, to a network, a multi-antenna port calibration capability indicator for facilitating non-codebook based precoding for uplink communications between the UE and
the network, wherein the multi-antenna port calibration capability indicator indicates a capability of the UE to perform relative phase and/or amplitude calibration between multiple antenna ports of the UE;
controlling reception of configuration information from a network node of the network, wherein the configuration information comprises one or more antenna port sets, and one or more usage indicators associated with the one or more antenna port sets;
controlling determination of precoding for uplink transmission between the UE and the network based on the received configuration information;
controlling precoding of at least one reference signal, to be transmitted using a set, using the determined precoding for the set;
controlling transmission, to the network, the at least one precoded reference signal by the set associated with the precoding;
controlling reception, from the network, a set indication for indicating which set of the one or more antenna port sets is to be used for uplink transmission between the UE and the network; and
controlling enabling of uplink transmission between the UE and the network using the indicated antenna port set.

In some examples, there is a (computer implemented) system comprising a UE and a network node 120, the UE and/or the network node 120 comprising means for:
controlling obtaining of an indication to initiate determination of the multi-antenna port calibration capability;
controlling initiation of determination of the multi-antenna port calibration capability in dependence upon obtaining the indication;
controlling measurement of one or more reference signals using one or more antenna ports; controlling comparison of a measurement of a first measured reference signal against a measurement of a second measured reference signal;
controlling determination of a difference between one or more dynamic characteristics of a first antenna port of the two or more antenna ports and one or more corresponding dynamic characteristics of a second antenna port of the two or more antenna ports;
controlling identification of one or more valid RF branches covering a first frequency band;
controlling determination of, based on the identification of one or more valid RF branches covering a first frequency band, a number of valid RF branches covering the first frequency band;
controlling determination of a number of available antenna ports covering the first frequency band;
controlling determination of a maximum number of available antenna ports for transmission within the first frequency band;
controlling determination of a maximum number of fully-calibrated antenna ports available for transmission within the first frequency band;
controlling determination of a maximum number of partially-calibrated antenna ports available for transmission within the first frequency band;
controlling generation of a multi-antenna port calibration capability indicator; and controlling transmission of the multi-antenna port calibration capability indicator to the network.

As illustrated in Fig 7B, the instructions, program, or code 706 may arrive at the apparatus 110, 120 (not illustrated) via any suitable delivery mechanism 708. The delivery mechanism 708 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 706. The delivery mechanism may be a signal configured to reliably transfer the computer program 706. The apparatus 110, 12 may propagate or transmit the computer program 706 as a computer data signal.

The term "non-transitory" as used herein, is a limitation of the medium itself (i.e., tangible, not a signal) as opposed to a limitation on data storage persistency (e.g., RAM vs. ROM).

Computer program instructions for causing an apparatus to perform at least the following or for performing at least the following:
transmitting, to a network, a multi-antenna port calibration capability indicator for facilitating non-codebook based precoding for uplink communications between the UE and the network,
wherein the multi-antenna port calibration capability indicator indicates a capability of the UE to perform relative phase and/or amplitude calibration between multiple antenna ports of the UE;
receiving configuration information from a network node of the network, wherein the configuration information comprises one or more antenna port sets, and one or more usage indicators associated with the one or more antenna port sets;
determining precoding for uplink transmission between the UE and the network based on the received configuration information;
precoding at least one reference signal, to be transmitted using a set, using the determined precoding for the set;
transmitting, to the network, the at least one precoded reference signal by the set associated with the precoding;
receiving, from the network, a set indication for indicating which set of the one or more antenna port sets is to be used for uplink transmission between the UE and the network; and enabling uplink transmission between the UE and the network using the indicated antenna port set.

Computer program instructions for causing an apparatus to perform at least the following or for performing at least the following:
obtaining an indication to initiate determination of the multi-antenna port calibration capability;
initiating determination of the multi-antenna port calibration capability in dependence upon obtaining the indication;
measuring one or more reference signals using one or more antenna ports;
comparing a measurement of a first measured reference signal against a measurement of a second measured reference signal;
determining a difference between one or more dynamic characteristics of a first antenna port of the two or more antenna ports and one or more corresponding dynamic characteristics of a second antenna port of the two or more antenna ports;
identifying one or more valid RF branches covering a first frequency band;
determining, based on the identification of one or more valid RF branches covering a first frequency band, a number of valid RF branches covering the first frequency band;
determining a number of available antenna ports covering the first frequency band;
determining a maximum number of available antenna ports for transmission within the first frequency band;
determining a maximum number of fully-calibrated antenna ports available for transmission within the first frequency band;
determining a maximum number of partially-calibrated antenna ports available for transmission within the first frequency band;
generating the multi-antenna port calibration capability indicator; and
transmitting the multi-antenna port calibration capability indicator to the network.

The computer program instructions may be comprised in a computer program, a non-transitory computer readable medium, a computer program product, a machine readable medium. In some but not necessarily all examples, the computer program instructions may be distributed over more than one computer program.

Although the memory 704 is illustrated as a single component/circuitry it may be implemented as one or more separate components/circuitry some or all of which may be integrated/removable and/or may provide permanent/semi-permanent/ dynamic/cached storage.

Although the processor 702 is illustrated as a single component/circuitry it may be implemented as one or more separate components/circuitry some or all of which may be integrated/removable. The processor 702 may be a single core or multi-core processor.

The present subject matter may comprise the following clauses.

Clause 1. A user equipment, UE, comprising means for determining a multi-antenna port calibration capability of the UE, wherein the multi-antenna port calibration capability depends on a capability of the UE to perform relative phase and/or amplitude calibration between multiple antenna ports of the UE.

Clause 2. A user equipment of clause 1, wherein determining the multi-antenna port calibration capability comprises generating a multi-antenna port calibration capability indicator for facilitating non-codebook-based precoding for uplink communications between the UE and a network, wherein the multi-antenna port calibration capability indicator indicates a capability of the UE to perform relative phase and/or amplitude calibration between multiple antenna ports of the UE.

Clause 3. A user equipment of clause 1 or 2, wherein determining the multi-antenna port calibration capability comprises measuring one or more reference signals using one or more antenna ports.

Clause 4. A user equipment of clause 3, wherein determining the multi-antenna port calibration capability comprises measuring symbols of the one or more reference signals.

Clause 5. A user equipment of any of clauses 1 - 4, wherein determining the multi-antenna port calibration capability comprises comparing a measurement of a first measured reference signal against a measurement of a second reference signal, wherein the first reference signal is a downlink reference signal and the second reference signal is at least one of: a measurement of a different measured reference signal; a measurement of a reference signal measured at a different antenna port to the first measured reference signal; an uplink reference signal; or an expected measurement of a reference signal.

Clause 6. A user equipment of clause 5, wherein determining the multi-antenna port precoding values comprises determining a difference between one or more dynamic characteristics of two or more antenna ports based, at least in part, on a comparison of a measurement of one or more downlink reference signals measured at the first antenna port and the second antenna port.

Clause 7. A user equipment of clause 5, wherein determining the multi-antenna port calibration capability comprises determining a difference between one or more dynamic characteristics of a first antenna port of the two or more antenna ports and one or more dynamic characteristics of a second antenna port of the two or more antenna ports based, at least in part, on a comparison of a measurement of a downlink reference signal measured at the first antenna port and a measurement of a downlink reference signal measured at the second antenna port.

Clause 8. A user equipment of clause 7, wherein the one or more dynamic characteristics comprise at least one of: directivity; complex impedance; angular direction of maximum gain; phase; amplitude.

Clause 9. A user equipment of any of clauses 5 - 8, comprising means for identifying, based on the comparison of the measurement of the first measured reference signal and the measurement of the second measured reference signal, one or more valid RF-branches covering a first frequency band, wherein an RF-branch is connected to one of one or more selectable antenna ports.

Clause 10. A user equipment of clause 9, wherein the identification of the one or more valid RF branches covering a first frequency band is based, at least in part, on the comparison of the measurement of the first measured reference signal and the measurement of the second measured reference signal.

Clause 11. A user equipment of clause 10, wherein the identification of the one or more valid RF branches covering a first frequency band is based, at least in part on a measured downlink reference signal at an antenna port connected to the RF branch and a measured uplink reference signal at the antenna port connected to the RF branch.

Clause 12. A user equipment of any of clauses 9 - 11, wherein a UE is fully-calibrated if the UE is capable of performing relative phase and/or amplitude calibration between antenna ports connected to the RF branches of the UE and the RF branches of the UE are valid.

Clause 13. A user equipment of any of clauses 9 - 12, wherein a UE is partially-calibrated if the UE is capable of performing relative phase and/or amplitude calibration between a subset of the antenna ports connected to a subset of the RF branches of the UE and/or a subset of the RF branches of the UE are valid.

Clause 14. A user equipment of any of clauses 9 - 13, wherein a UE is non-calibrated if the UE is not capable of performing relative phase and/or amplitude calibration between the antenna ports connected to the RF branches of the UE or all of the RF branches of the UE are invalid.

Clause 15. A user equipment of any of clauses 9 - 14, comprising means for determining, based on the identification of one or more valid RF-branches covering a first frequency band, a number of valid RF-branches covering the first frequency band.

Clause 16. A user equipment of any preceding clause, comprising means for determining a number of available antenna ports covering the first frequency band.

Clause 17. A user equipment of clause 16, wherein determining a number of available antenna ports covering the first frequency band comprises: determining a number of antenna ports of the UE which cover the first frequency band; and determining how many of the antenna ports covering the first frequency band are in use,
and determining the number of available antenna ports covering the first frequency band by subtracting the number of antenna ports in use from the number of antenna ports which cover the first frequency band.

Clause 18. A user equipment of clause 16 or 17 when dependent upon any of clauses 9 - 14, comprising means for determining a maximum number of available antenna ports for transmission within the first frequency band based at least in part on the determined number of valid RF branches covering the first frequency band and the determined number of antenna ports covering the first frequency band.

Clause 19. A user equipment of clause 18, wherein the maximum number of available antenna ports for transmission within the first frequency band is equal to the determined number of valid RF branches covering the first frequency band if: the determined number of available antenna ports covering the first frequency band is equal to, or greater than, the determined number of valid RF branches covering the first frequency band; and all of the available antenna ports covering the first frequency band can be connected to all of the valid RF branches.

Clause 20. A user equipment of clause 18, wherein the maximum number of available antenna ports for transmission within the first frequency band is equal to the lower of the determined number of valid RF branches covering the first frequency band and the determined number of available antenna ports covering the first frequency band.

Clause 21. A user equipment of any of clauses 18 - 20, comprising means for determining at least one of a maximum number of fully-calibrated antenna ports available for transmission within the first frequency band and a maximum number of partially-calibrated antenna ports available for transmission within the first frequency band based on the calibration capabilities of the determined valid RF branches covering the first frequency band.

Clause 22. A user equipment of clause 21, comprising means for identifying an available antenna port as having a calibration capability of fully-calibrated or partially-calibrated in dependence upon a calibration capability of an RF branch to which the antenna port is connected.

Clause 23. A user equipment of any of clauses 18 - 22, comprising means for generating the multi-antenna port calibration capability indicator comprises generating an indication of the number of available antenna ports for transmission within the first frequency band.

Clause 24. A user equipment of any preceding clause, comprising means for: obtaining an indication to initiate determination of the multi-antenna port calibration capability; and initiating determination of the multi-antenna port calibration capability based on the indication.

Clause 25. A user equipment of clause 23, comprising means for receiving the indication from a network node and/or means for generating the indication based on a trigger condition being met.

The above disclosure requires new capability signaling with new information elements to be signaled which would be realized in 6G version of the standard.

Furthermore, 6G version of the standard would have new information elements in SRS-Config in SRS-ResourceSet or SRS-Resource definitions.

Furthermore, 6G version of the standard would have corresponding configuration information in dedicated clause for SRS as well as clauses for non-codebook based PUSCH where UE procedure to transmit corresponding UL SRS resources are defined.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all the following:
(a) hardware-only circuitry implementations (such as implementations in only analog and/or digital circuitry) and
(b) combinations of hardware circuits and software, such as (as applicable):
   a combination of analog and/or digital hardware circuit(s) with software/firmware and
   any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the claim element, a baseband integrated circuit for a mobile device or a similar integrated circuit in a server, a cellular network device, or other computing or network device.

The blocks illustrated in the accompanying Figs may represent steps in a method and/or sections of code in the computer program 806. The illustration of a particular order to the blocks does not necessarily imply that there is a required or preferred order for the blocks and the order and arrangement of the block may be varied. Furthermore, it may be possible for some blocks to be omitted.

As used here 'module' refers to a unit or apparatus that excludes certain parts/components that would be added by an end manufacturer or a user. The apparatus 810 can, for example be a module. A controller 700 of the apparatus 810 can, for example be a module.

Where a structural feature has been described, it may be replaced by means for performing one or more of the functions of the structural feature whether that function or those functions are explicitly or implicitly described.

The radio frequency circuitry and the antenna may be configured to operate in a plurality of operational resonant frequency bands. For example, the operational frequency bands may include (but are not limited to) Long Term Evolution (LTE) (US) (734 to 746 MHz and 869 to 894 MHz), Long Term Evolution (LTE) (rest of the world) (791 to 821 MHz and 925 to 960 MHz), amplitude modulation (AM) radio (0.535-1.705 MHz); frequency modulation (FM) radio (76-108 MHz); Bluetooth (2400-2483.5 MHz); wireless local area network (WLAN) (2400-2483.5 MHz); hiper local area network (HiperLAN) (5150-5850 MHz); global positioning system (GPS) (1570.42-1580.42 MHz); US - Global system for mobile communications (US-GSM) 850 (824-894 MHz) and 1900 (1850 - 1990 MHz); European global system for mobile communications (EGSM) 900 (880-960 MHz) and 1800 (1710 - 1880 MHz); European wideband code division multiple access (EU-WCDMA) 900 (880-960 MHz); personal communications network (PCN/DCS) 1800 (1710-1880 MHz); US wideband code division multiple access (US-WCDMA) 1700 (transmit: 1710 to 1755 MHz , receive: 2110 to 2155 MHz) and 1900 (1850-1990 MHz); wideband code division multiple access (WCDMA) 2100 (transmit: 1920-1980 MHz, receive: 2110-2180 MHz); personal communications service (PCS) 1900 (1850-1990 MHz); time division synchronous code division multiple access (TD-SCDMA) (1900 MHz to 1920 MHz, 2010 MHz to 2025 MHz), ultra wideband (UWB) Lower (3100-4900 MHz); UWB Upper (6000-10600 MHz); digital video broadcasting - handheld (DVB-H) (470-702 MHz); DVB-H US (1670-1675 MHz); digital radio mondiale (DRM) (0.15-30 MHz); worldwide interoperability for microwave access (WiMax) (2300-2400 MHz, 2305-2360 MHz, 2496-2690 MHz, 3300-3400 MHz, 3400-3800 MHz, 5250-5875 MHz); digital audio broadcasting (DAB) (174.928-239.2 MHz, 1452.96- 1490.62 MHz); radio frequency identification low frequency (RFID LF) (0.125-0.134 MHz); radio frequency identification high frequency (RFID HF) (13.56-13.56 MHz); radio frequency identification ultra high frequency (RFID UHF) (433 MHz, 865-956 MHz, 2450 MHz), frequency allocations for 5G may include e.g. 700MHz, 410 MHz - 7125 MHz (FR1), 24250 MHz - 52600 MHz (FR2), 3.6-3.8GHz, 24.25-27.5GHz, 31.8-33.4GHz, 37.45-43.5, 66-71GHz, mmWave, and > 24GHz ).

The above-described examples find application as enabling components of:
automotive systems; telecommunication systems; electronic systems including consumer electronic products; distributed computing systems; media systems for generating or
rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks;
ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

As used herein, "at least one of the following:" and "at least one of" and similar wording, where the list of two or more elements are joined by "and" or "or" mean at least any one of the elements, or at least any two or more of the elements, or at least all the elements.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of `at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

## Claims

1. A user equipment, UE, comprising means for determining a multi-antenna port calibration capability of the UE,
wherein the multi-antenna port calibration capability depends on a capability of the UE to perform relative phase and/or amplitude calibration between multiple antenna ports of the UE.

2. A user equipment as claimed in claim 1, wherein determining the multi-antenna port calibration capability comprises generating a multi-antenna port calibration capability indicator for facilitating non-codebook-based precoding for uplink communications between the UE and a network, wherein the multi-antenna port calibration capability indicator indicates a capability of the UE to perform relative phase and/or amplitude calibration between multiple antenna ports of the UE.

3. A user equipment as claimed in claim 1 or 2, wherein determining the multi-antenna port calibration capability comprises measuring one or more reference signals using one or more antenna ports, wherein determining the multi-antenna port calibration capability comprises measuring symbols of the one or more reference signals.

4. A user equipment as claimed in any of claims 1 - 3, comprising means for identifying, based on the comparison of the measurement of the first measured reference signal and the measurement of the second measured reference signal, one or more valid RF-branches covering a first frequency band, wherein an RF-branch is connected to one of one or more selectable antenna ports, wherein the identification of the one or more valid RF branches covering a first frequency band is based, at least in part, on the comparison of the measurement of the first measured reference signal and the measurement of the second measured reference signal.

5. A user equipment as claimed in claim 4, wherein the identification of the one or more valid RF branches covering a first frequency band is based, at least in part on a measured downlink reference signal at an antenna port connected to the RF branch and a measured uplink reference signal at the antenna port connected to the RF branch.

6. A user equipment as claimed in any of claims 4 - 5, wherein a UE is fully-calibrated if the UE is capable of performing relative phase and/or amplitude calibration between antenna ports connected to the RF branches of the UE and the RF branches of the UE are valid.

7. A user equipment as claimed in any of claims 4 - 6, wherein a UE is partially-calibrated if the UE is capable of performing relative phase and/or amplitude calibration between a subset of the antenna ports connected to a subset of the RF branches of the UE and/or a subset of the RF branches of the UE are valid.

8. A user equipment as claimed in any of claims 4 - 7, wherein a UE is non-calibrated if the UE is not capable of performing relative phase and/or amplitude calibration between the antenna ports connected to the RF branches of the UE or all of the RF branches of the UE are invalid.

9. A user equipment as claimed in any of claims 4 - 8, comprising means for determining, based on the identification of one or more valid RF-branches covering a first frequency band, a number of valid RF-branches covering the first frequency band.

10. A user equipment as claimed in any preceding claim, comprising means for determining a number of available antenna ports covering the first frequency band, wherein determining a number of available antenna ports covering the first frequency band comprises:
determining a number of antenna ports of the UE which cover the first frequency band; and
determining how many of the antenna ports covering the first frequency band are in use,
and determining the number of available antenna ports covering the first frequency band by subtracting the number of antenna ports in use from the number of antenna ports which cover the first frequency band.

11. A user equipment as claimed in claim 10, wherein the maximum number of available antenna ports for transmission within the first frequency band is equal to the determined number of valid RF branches covering the first frequency band if:
the determined number of available antenna ports covering the first frequency band is equal to, or greater than, the determined number of valid RF branches covering the first frequency band; and
all of the available antenna ports covering the first frequency band can be connected to all of the valid RF branches.

12. A user equipment as claimed in any of claims 10 - 11, comprising means for determining at least one of a maximum number of fully-calibrated antenna ports available for transmission within the first frequency band and a maximum number of partially-calibrated antenna ports available for transmission within the first frequency band based on the calibration capabilities of the determined valid RF branches covering the first frequency band.

13. A user equipment as claimed in claim 12, comprising means for identifying an available antenna port as having a calibration capability of fully-calibrated or partially-calibrated in dependence upon a calibration capability of an RF branch to which the antenna port is connected.

14. A user equipment as claimed in any of claims 10 - 13, comprising means for generating the multi-antenna port calibration capability indicator comprises generating an indication of the number of available antenna ports for transmission within the first frequency band.

15. A user equipment as claimed in claim 14, comprising means for receiving the indication from a network node and/or means for generating the indication based on a trigger condition being met.
